# EUROPEAN PATENT APPLICATION

(11) **EP 2 546 694 A1**
(43) Date of publication of application: **16.01.2013**
(21) Application number: 10847490.9
(22) Date of filing: 02.11.2010
(51) Int. Cl.: G02F 1/17, G09F 9/37

(54) **DISPLAY ELEMENT, AND ELECTRICAL DEVICE USING SAME**

(30) Priority: 08.03.2010 JP 2010050894
(71) Applicant: Sharp Kabushiki Kaisha, Osaka-shi, Osaka 545-8522 (JP)
(72) Inventor: UEKI Shun, Osaka-shi Osaka 545-8522 (JP); MATSUOKA Toshiki, Osaka-shi Osaka 545-8522 (JP); TOMOTOSHI Takuma, Osaka-shi Osaka 545-8522 (JP); NAKAMURA Kohzoh, Osaka-shi Osaka 545-8522 (JP)
(74) Representative: Müller - Hoffmann & Partner
(86) International application number: PCT/JP2010/069463
(87) International publication number: WO 2011/111263

(57) **Abstract**

A display element (2) includes an upper substrate (first substrate) (6), a lower substrate (second substrate) (7), an effective display region (P1) and a non-effective display region (P2) that are defined with respect to a display space (K) formed between the upper substrate (6) and the lower substrate (7), and a polar liquid (12) that is movably sealed in the display space (K). In the display element (2), a common electrode (first electrode) (9) and a pixel electrode (second electrode) (8) are provided. The effective display region (P1) and the non-effective display region (P2) are defined so that the polar liquid (12) is moved along the up-and-down direction in the display space (K).

## Description

### Technical Field

The present invention relates to a display element that displays information such as images and characters by moving a polar liquid, and an electrical device using the display element.

### Background Art

In recent years, as typified by an electrowetting type display element, a display element that displays information by utilizing a transfer phenomenon of a polar liquid due to an external electric field has been developed and put to practical use.

Specifically, such a conventional display element includes first and second electrodes, first and second substrates, and a colored droplet that is sealed in a display space formed between the first substrate and the second substrate and serves as a polar liquid that is colored a predetermined color (see, e.g., Patent Document 1). In this conventional display element, an electric field is applied to the colored droplet via the first electrode and the second electrode to change the shape of the colored droplet, thereby changing the display color on a display surface.

For the above conventional display element, another configuration also has been proposed, in which the first electrode and the second electrode are arranged side by side on the first substrate and electrically insulated from the colored droplet, and a third electrode is provided on the second substrate so as to face the first electrode and the second electrode. Moreover, a light-shielding shade is provided above the first electrode. Thus, the first electrode side and the second electrode side are defined as a non-effective display region and an effective display region, respectively. With this configuration, a voltage is applied so that a potential difference occurs between the first electrode and the third electrode or between the second electrode and the third electrode. In this case, compared to the way of changing the shape of the colored droplet, the colored droplet can be moved toward the first electrode or the second electrode at a high speed, and thus the display color on the display surface can be changed at a high speed as well.

### Prior Art Documents

### Patent Documents

Patent Document 1: JP 2004-252444 A

### Disclosure of Invention

### Problem to be Solved by the Invention

In the above conventional display element, even the position of the colored droplet (polar liquid) with respect to the light-shielding shade (light-shielding film) (i.e., the position of the colored droplet that has been moved into the effective display region) is adjusted by adjusting the voltage applied to each of the first to third electrodes, so that halftone display can be performed.

However, in the conventional display element, the amount of light emitted to an observer (e.g., a user) is significantly changed due to the colored liquid itself, which may lead to a reduction in display quality. In particular, when the halftone display is performed, light from a backlight that is located on the non-display surface side of the display element is to be blocked by the colored liquid, and the amount of light blocked by the colored liquid can differ according to the position and size of the colored droplet, the viewing direction of the observer, or the like. Therefore, in some cases the amount of light emitted to the observer is greatly reduced, and in other cases the leakage of light occurs. Consequently, desired halftone display cannot be performed depending on the azimuth direction from which the observer views the display element, and the display quality can be reduced.

With the foregoing in mind, it is an object of the present invention to provide a display element that can perform desired halftone display no matter which azimuth direction an observer views the display from, and thus can suppress a reduction in display quality, and an electrical device using the display element.

### Means for Solving Problem

To achieve the above object, a display element of the present invention includes the following: a first substrate provided on a display surface side; a second substrate provided on a non-display surface side of the first substrate so that a predetermined display space is formed between the first substrate and the second substrate; an effective display region and a non-effective display region that are defined with respect to the display space; and a polar liquid sealed in the display space so as to be moved toward at least the effective display region. The display element is capable of changing a display color on the display surface side by moving the polar liquid. The display element includes a first electrode that is placed in the display space so as to come into contact with the polar liquid, and a second electrode that is provided on one of the first substrate and the second substrate so as to be electrically insulated from the polar liquid and the first electrode. The effective display region and the non-effective display region are defined so that the polar liquid is moved along an up-and-down direction in the display space.

In the display element having the above configuration, the effective display region and the non-effective display region are defined so that the polar liquid is moved along the up-and-down direction in the display space. Therefore, when the halftone display is performed, it is possible to prevent the amount of light emitted to the observer (e.g., the user) from being significantly changed due to the polar liquid itself, no matter which azimuth direction the observer views the display from. Consequently, unlike the conventional example, the display element can perform desired halftone display no matter which azimuth direction the observer views the display from, and thus can suppress a reduction in display quality.

In the context of the present invention, the up-and-down direction is defined as a direction that is oriented opposite to the direction of the force of gravity and has a predetermined angle in the range of 0° to less than 90° measured with respect to a perpendicular direction (i.e., the direction of the force of gravity). In other words, the up-and-down direction is the same as the vertical direction of the display surface of the display element when the display surface is placed at an angle in the above angular range with respect to the perpendicular direction.

In the above display element, it is preferable that the non-effective display region is defined by a light-shielding film that is provided on the other of the first substrate and the second substrate, and the effective display region is defined by an aperture formed in the light-shielding film.

In this case, the effective display region and the non-effective display region can be properly and reliably defined with respect to the display space.

In the above display element, the effective display region and the non-effective display region may be set to be substantially parallel to the perpendicular direction.

In this case, the display element with excellent display quality can be easily provided.

In the above display element, data lines and gate lines may be provided on one of the first substrate and the second substrate in the form of a matrix, a planar transparent electrode that serves as the first electrode may be provided on the other of the first substrate and the second substrate, and a plurality of pixel regions may be located at each of intersections of the data lines and the gate lines. In each of the plurality of the pixel regions, a switching element may be connected to the data line and the gate line, a pixel electrode that serves as the second electrode may be connected to the switching element, and a capacitor that stores a charge supplied to the pixel electrode may be provided.

In this case, a matrix-driven display element with excellent display quality can be provided.

In the above display element, a reflecting electrode may be used as the pixel electrode.

In this case, light from the outside of the display element can be used to display information, and thus a compact display element with low power consumption can be easily provided.

In the above display element, it is preferable that the capacitor is a dielectric layer that is provided on one of the first substrate and the second substrate so as to cover the pixel electrode.

In this case, the placement of the capacitor that is a discrete component can be eliminated, and thus the display element having a simple structure can be easily provided.

In the above display element, the plurality of the pixel regions may be provided in accordance with a plurality of colors that enable full-color display to be shown on the display surface side.

In this case, the color image display can be performed by moving the corresponding polar liquid properly in each of the pixels.

In the above display element, a signal electrode that serves as the first electrode may be placed in the display space, a reference electrode that serves as the second electrode may be provided on one of the first substrate and the second substrate so as to be located on one of the effective display region side and the non-effective display region side, and a scanning electrode that serves as the second electrode may be provided on one of the first substrate and the second substrate so as to be electrically insulated from the reference electrode and to be located on the other of the effective display region side and the non-effective display region side.

In this case, the display color on the display surface can be changed without using a switching element, and thus the display element having a simple structure can be provided.

In the above display element, a plurality of the signal electrodes may be provided along a predetermined arrangement direction, and a plurality of the reference electrodes and a plurality of the scanning electrodes may be alternately arranged so as to intersect with the plurality of the signal electrodes. Moreover, it is preferable that the display element includes the following: a signal voltage application portion that is connected to the plurality of the signal electrodes and applies a signal voltage in a predetermined voltage range to each of the signal electrodes in accordance with information to be displayed on the display surface side; a reference voltage application portion that is connected to the plurality of the reference electrodes and applies one of a selected voltage and a non-selected voltage to each of the reference electrodes, the selected voltage allowing the polar liquid to move in the display space in accordance with the signal voltage and the non-selected voltage inhibiting a movement of the polar liquid in the display space; and a scanning voltage application portion that is connected to the plurality of the scanning electrodes and applies one of a selected voltage and a non-selected voltage to each of the scanning electrodes, the selected voltage allowing the polar liquid to move in the display space in accordance with the signal voltage and the non-selected voltage inhibiting a movement of the polar liquid in the display space.

In this case, a matrix-driven display element with excellent display quality can be easily provided.

In the above display element, it is preferable that the plurality of the pixel regions are located at each of the intersections of the plurality of the signal electrodes and the plurality of the scanning electrodes.

In this case, the display color on the display surface can be changed pixel by pixel by moving the polar liquid in each of the pixels on the display surface side.

In the above display element, it is preferable that a dielectric layer is formed on the surfaces of the plurality of the reference electrodes and the plurality of the scanning electrodes.

In this case, the dielectric layer reliably increases the electric field applied to the polar liquid, so that the speed of movement of the polar liquid can be more easily improved.

In the above display element, the plurality of the pixel regions may be provided in accordance with a plurality of colors that enable full-color display to be shown on the display surface side.

In this case, the color image display can be performed by moving the corresponding polar liquid properly in each of the pixels.

In the above display element, it is preferable that an insulating fluid that is not mixed with the polar liquid is movably sealed in the display space.

In this case, the speed of movement of the polar liquid can be easily improved.

An electrical device of the present invention includes a display portion that displays information including characters and images. The display portion includes any of the above display elements.

In the electrical device having the above configuration, the display portion uses the display element that can perform desired halftone display no matter which azimuth direction the observer views the display from, and thus can suppress a reduction in display quality. Therefore, the electrical device with excellent display performance can be easily provided.

### Effects of the Invention

The present invention can provide a display element that can perform desired halftone display no matter which azimuth direction an observer views the display from, and thus can suppress a reduction in display quality, and an electrical device using the display element.

### Brief Description of Drawings

[FIG. 1] FIG. 1 is plan view for explaining a display element and an image display apparatus of Embodiment 1 of the present invention.
[FIG. 2] FIG. 2 is a diagram for explaining the specific configuration of the main portion in a pixel region of the display element in FIG. 1.
[FIG. 3] FIG. 3 is an enlarged plan view showing the main configuration of the upper substrate in FIG. 1 when viewed from a display surface side.
[FIG. 4] FIG. 4 is an enlarged plan view showing the main configuration of the lower substrate in FIG. 1 when viewed from a non-display surface side.
[FIG. 5] FIGS. 5A and 5B are cross-sectional views showing the main configuration of the display element in FIG. 1 during black display and white display, respectively.
[FIG. 6] FIG. 6 is a diagram for explaining the viewing angle characteristics of the display element in FIG. 1. FIG. 6A is a diagram for explaining a specific viewing point. FIG. 6B is a diagram for explaining the viewing angle characteristics at different angles in the up-and-down direction.
[FIG. 7] FIGS. 7A and 7B are graphs for explaining the angular dependence of the transmittance in the up-and-down direction and the lateral direction at the viewing point shown in FIG. 6A, respectively.
[FIG. 8] FIGS. 8A and 8B are cross-sectional views showing the main configuration of a display element of Embodiment 2 of the present invention during black display and white display, respectively.
[FIG. 9] FIG. 9 is plan view for explaining a display element and an image display apparatus of Embodiment 3 of the present invention.
[FIG. 10] FIG. 10 is an enlarged plan view showing the main configuration of the upper substrate in FIG. 9 when viewed from a display surface side.
[FIG. 11] FIG. 11 is an enlarged plan view showing the main configuration of the lower substrate in FIG. 9 when viewed from a non-display surface side.
[FIG. 12] FIGS. 12A and 12B are cross-sectional views showing the main configuration of the display element in FIG. 9 during black display and white display, respectively.
[FIG. 13] FIG. 13 is a diagram for explaining an operation example of the image display apparatus in FIG. 9.
[FIG. 14] FIG. 14 is a diagram for explaining the viewing angle characteristics of the display element in FIG. 9. FIG. 14A is a diagram for explaining a specific viewing point. FIG. 14B is a diagram for explaining the viewing angle characteristics at different angles in the up-and-down direction.
[FIG. 15] FIGS. 15A and 15B are graphs for explaining the angular dependence of the transmittance in the up-and-down direction and the lateral direction at the viewing point shown in FIG. 14A, respectively.
[FIG. 16] FIG. 16 is an enlarged plan view showing the main configuration of the upper substrate of a display element of Embodiment 4 of the present invention when viewed from a display surface side
[FIG. 17] FIGS. 17A and 17B are cross-sectional views showing the main configuration of the display element in FIG. 16 during non-CF color display and CF color display, respectively.
[FIG. 18] FIG. 18 is a diagram showing an operation example of an image display apparatus using the display element in FIG. 16.

### Description of the Invention

Hereinafter, preferred embodiments of a display element and an electrical device of the present invention will be described with reference to the drawings. In the following description, the present invention is applied to an image display apparatus including a display portion that is capable of displaying information. The size and size ratio of each of the constituent members in the drawings do not exactly reflect those of the actual constituent members.

### [Embodiment 1]

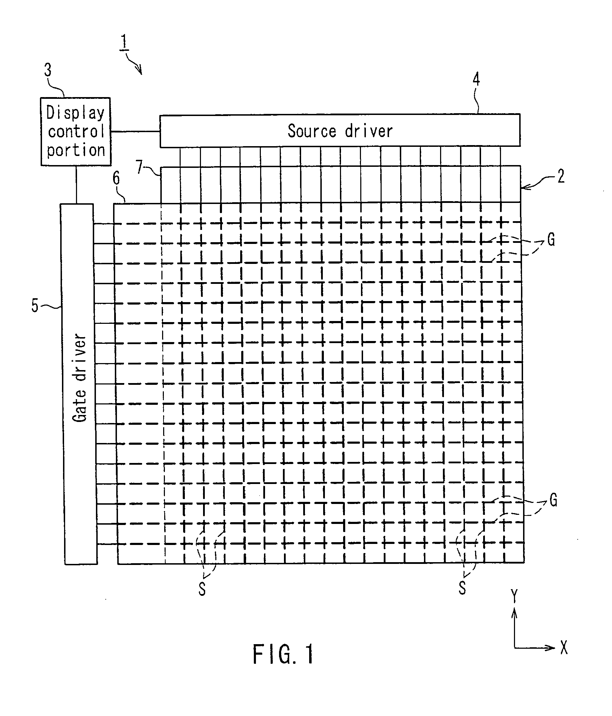

FIG. 1 is a plan view for explaining a display element and an image display apparatus of Embodiment 1 of the present invention. In FIG. 1, an image display apparatus 1 of this embodiment includes a display portion using a display element 2 of this embodiment. The display portion has a rectangular display surface. The display element 2 is provided with a display control portion 3, and a source driver 4 and a gate driver 5 that are connected to the display control portion 3. The display control portion 3 receives an external video signal, produces instruction signals based on the input video signal, and then outputs the instruction signals to the source driver 4 and the gate driver 5, respectively. Thus, the display element 2 can display information including characters and images in accordance with the video signal.

The display element 2 includes an upper substrate 6 and a lower substrate 7 that are arranged to overlap each other in a direction perpendicular to the sheet of FIG. 1. The overlap between the upper substrate 6 and the lower substrate 7 forms an effective display region of the display surface (as will be described in detail later).

In the display element 2, a plurality of source lines (data lines) S are spaced at predetermined intervals and arranged in stripes in the X direction. Moreover, in the display element 2, a plurality of gate lines G are spaced at predetermined intervals and arranged in stripes in the Y direction. The source lines S and the gate lines G are provided, e.g., on the lower substrate 6 so as to intersect in the form of a matrix, and a plurality of pixel regions are located at each of the intersections of the source lines S and the gate lines G.

The source lines S are connected to the source driver 4 and the gate lines G are connected to the gate driver 5. The source driver 4 and the gate driver 5 supply source signals (voltage signals) and gate signals to the source lines S and the gate lines G in accordance with the video signal input to the display control portion 3, respectively.

In the display element 2, the pixel regions are separated from one another by partitions, as will be described in detail later. The display element 2 changes the display color on the display surface by deforming (moving) a polar liquid (as will be described later) for each of a plurality of pixels (display cells) arranged in a matrix using an electrowetting phenomenon.

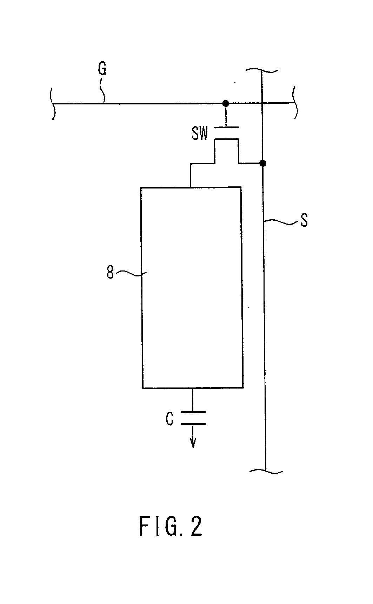

The pixel structure of the display element 2 will be described in detail with reference to FIGS. 2 to 5 as well as FIG. 1.

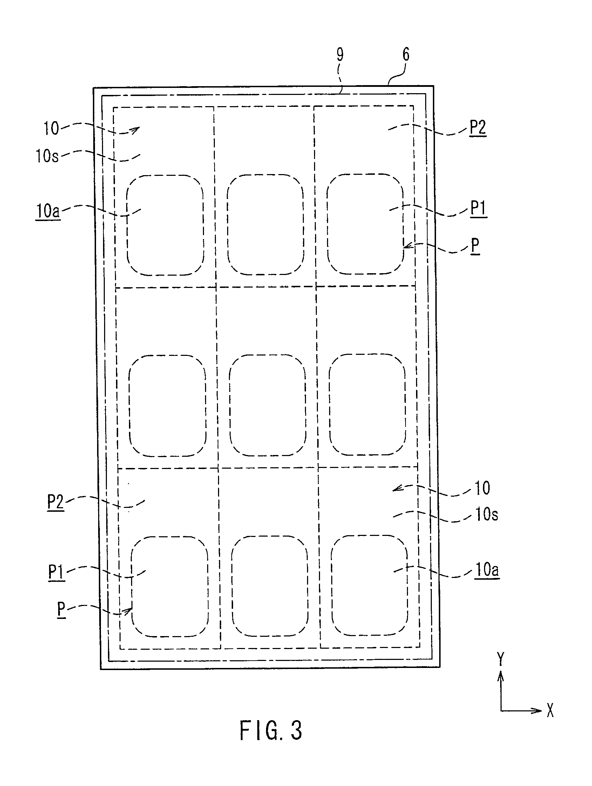

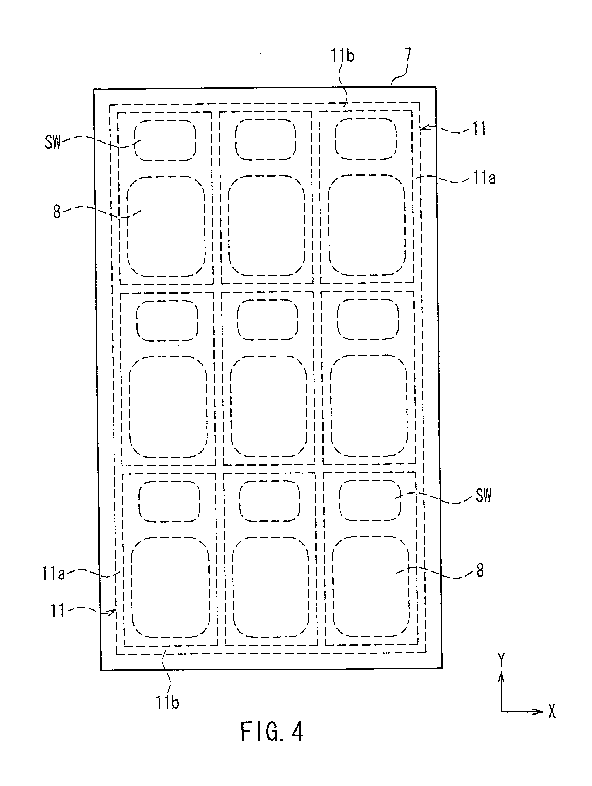

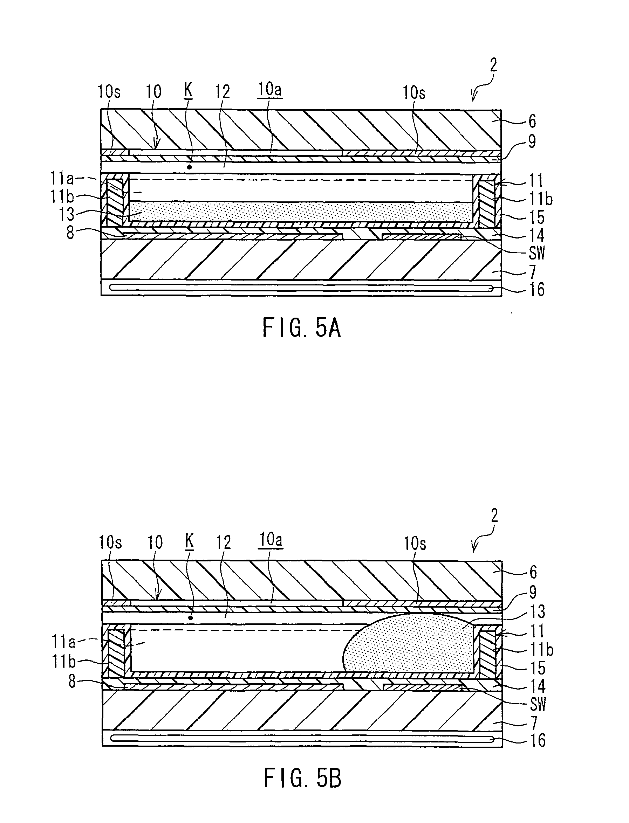

FIG. 2 is a diagram for explaining the specific configuration of the main portion in a pixel region of the display element in FIG. 1. FIG. 3 is an enlarged plan view showing the main configuration of the upper substrate in FIG. 1 when viewed from the display surface side. FIG. 4 is an enlarged plan view showing the main configuration of the lower substrate in FIG. 1 when viewed from the non-display surface side. FIGS. 5A and 5B are cross-sectional views showing the main configuration of the display element in FIG. 1 during black display and white display, respectively. For the sake of simplification, FIGS. 3 and 4 show nine pixels placed at the upper left corner of the plurality of pixels on the display surface in FIG. 1. Also, for the sake of simplification, FIG. 4 omits the source lines S and the gate lines G.

As shown in FIG. 2, in the display element 2, each of the pixel regions is set to the intersection of the source line S and the gate line G, and a thin film transistor (TFT) SW serving as a switching element, a pixel electrode 8 serving as a second electrode, and a capacitor C are provided in the vicinity of the intersection. In each of the pixel regions, a source electrode and a gate electrode of the thin film transistor SW are connected to the source line S and the gate line G, respectively. Moreover, a drain electrode of this thin film transistor SW is connected to the pixel electrode 8, and the pixel electrode 8 is connected to the capacitor C formed of a dielectric layer 14 (as will be described later) that is provided on the lower substrate 7 so as to cover the pixel electrode 8. In each of the pixel regions, when the thin film transistor SW is brought into the ON state by the gate signal, a voltage associated with the video signal is supplied as the source signal to the source line S and to the pixel electrode 8 via the thin film transistor SW, and a charge corresponding to the voltage is stored in the capacitor C (dielectric layer 14). Thus, the display element 2 constitutes an active matrix driven display portion having a switching element (active element) for each pixel.

In FIGS. 2 to 5, the display element 2 includes the upper substrate 6 that is provided on the display surface side and serves as a first substrate, and the lower substrate 7 that is provided on the back (i.e., the non-display surface side) of the upper substrate 2 and serves as a second substrate. In the display element 2, the upper substrate 6 and the lower substrate 7 are located at a predetermined distance away from each other, so that a predetermined display space K is formed between the upper substrate 6 and the lower substrate 7. The polar liquid 12 and a colored insulating oil 13 that is not mixed with the polar liquid 12 are sealed in the display space K and can be moved in the Y direction (i.e., the vertical direction of FIG. 4). The polar liquid 12 can be moved from a non-effective display region P2 to an effective display region P1, as will be described later.

The polar liquid 12 can be, e.g., an aqueous solution including water as a solvent and a predetermined electrolyte as a solute. Specifically, 1 mmol/L of potassium chloride (KCl) aqueous solution may be used as the polar liquid 12. In this embodiment, the polar liquid 12 is colorless and transparent because it contains nothing other than the above materials. However, a water-soluble liquid such as lower alcohol or ethylene glycol may be mixed with the polar liquid 12 to adjust its density, viscosity, melting point, and boiling point. Moreover, a self-dispersible pigment or a water-soluble dye also may be mixed with the polar liquid 12 to color it red, green, or blue.

The oil 13 is obtained, e.g., by coloring a nonpolar solvent with a pigment or a dye. The nonpolar solvent may include one or more than one selected from a side-chain higher alcohol, a side-chain higher fatty acid, an alkane hydrocarbon, a silicone oil, and a matching oil. The oil 13 is shifted in the display space K as the polar liquid 12 is slidably moved.

The oil 13 is colored and therefore functions as a shutter that allows or prevents light transmission in each pixel. Specifically, in each pixel of the display element 2, the area of the oil 13 that is to be positioned in the effective display region P1 inside the display space K is modulated, thereby switching the display between a light absorption state and a light transmission state, as will be described in detail later.

Moreover, the oil 13 is applied to the lower substrate 6, e.g., using a dispenser device or an ink jet device, and thus is sealed in the display space K for each of the pixel regions.

The upper substrate 6 can be, e.g., a transparent glass material such as a non-alkali glass substrate or a transparent sheet material such as a transparent synthetic resin (e.g., an acrylic resin). A light-shielding layer 10 and a common electrode 9 serving as a first electrode are formed in this order on the surface of the upper substrate 6 that faces the non-display surface side.

Like the upper substrate 6, the lower substrate 7 can be, e.g., a transparent glass material such as a non-alkali glass substrate or a transparent sheet material such as a transparent synthetic resin (e.g., an acrylic resin). The pixel electrodes 8 and the thin film transistors SW are formed on the surface of the lower substrate 7 that faces the display surface side. Moreover, the dielectric layer 14 is formed to cover the pixel electrodes 8 and the thin film transistors SW. Ribs 11 are formed on the surface of the dielectric layer 14 that faces the display surface side. The ribs 11 have first rib members 11a parallel to the Y direction and second rib members 11b parallel to the X direction. In the lower substrate 7, a hydrophobic film 15 is further formed to cover the dielectric layer 14 and the ribs 11. Other than the above description, the thin film transistors SW may not be covered with the dielectric layer 14.

A backlight 16 that emits, e.g., white illumination light is integrally attached to the back (i.e., the non-display surface side) of the lower substrate 7, thus providing a transmission type display element 2. The backlight 16 uses a light source such as a cold cathode fluorescent tube or an LED.

The pixel electrodes 8 can be transparent electrodes made of a transparent electrode material such as an ITO. The pixel electrodes 8 are provided on the lower substrate 7 so that each of the pixel electrodes 8 is located under the effective display region P1. The thin film transistors SW are provided on the lower substrate 7 so that each of the thin film transistors SW is located under the non-effective display region P2.

Like the pixel electrodes 8, the common electrode 9 can be a transparent electrode made of a transparent electrode material such as an ITO. The common electrode 9 is a planar transparent electrode and covers all the pixels provided on the display surface.

The light-shielding layer 10 includes a black matrix 10s serving as a light-shielding film and apertures 10a having a predetermined shape.

As shown in FIG. 3, in each of the pixel regions P of the display element 2, the aperture 10a is provided in a portion corresponding to the effective display region P1 of a pixel, and the black matrix 10s is provided in a portion corresponding to the non-effective display region P2 of the pixel. In other words, with respect to the display space S, the non-effective display region (non-aperture region) P2 is defined by the black matrix (light-shielding film) 10s and the effective display region P1 is defined by the aperture 10a formed in that black matrix 10s.

Moreover, in the display element 2, the effective display region P1 and the non-effective display region P2 are defined so that the polar liquid 12 is moved along the up-and-down direction in the display space K. Specifically, when the image display apparatus 1 is placed with the vertical direction (Y direction) of the display surface substantially parallel to the perpendicular direction, the effective display region P1 and the non-effective display region P2 in the display element 2 are also substantially parallel to the perpendicular direction.

In the display element 2, the area of the aperture 10a is the same as or slightly smaller than that of the effective display region P1. On the other hand, the area of the black matrix 10s is the same as or slightly larger than that of the non-effective display region P2. In FIG. 3, the boundary between two black matrixes 10s corresponding to the adjacent pixels is indicated by a dotted line to clarify the boundary between the adjacent pixels. Actually, however, no boundary is present between the black matrixes 10s of the light-shielding layer 10.

In the display element 2, the display space K is divided into the pixel regions P by the ribs 11 serving as the partitions as described above. Specifically, as shown in FIG. 4, the display space K of each pixel is partitioned by two opposing first rib members 11a having an appropriate height and two opposing second rib members 11b having an appropriate height. Moreover, in the display element 2, the first and second rib members 11a, 11b prevent the polar liquid 12 from flowing easily into the display space K of the adjacent pixel regions P. The first and second rib members 11a, 11b are made of, e.g., a negative photo-curable resin and have optical transparency. The height of the first and second rib members 11a, 11b protruding from the dielectric layer 14 is determined so as to prevent the flow of the polar liquid 12 between the adjacent pixels.

Other than the above description, e.g., the first rib members 11a may be separated from the second rib members 11b so that clearances are formed in four corners of the pixel region P. Moreover, the top portions of the frame-shaped ribs 11 may be in close contact with the surface of the upper substrate 2 so that the adjacent pixel regions P can be hermetically separated from each other.

The dielectric layer 14 can be, e.g., a transparent dielectric film containing a silicon nitride, a hafnium oxide, a titanium dioxide, or barium titanate. The hydrophobic film 15 is made of, e.g., a transparent synthetic resin, and preferably a fluoro polymer that functions as a hydrophilic layer for the polar liquid 12 when a voltage is applied. This can significantly change the wettability (contact angle) between the polar liquid 12 and the surface of the hydrophobic film 15 on the lower substrate 7 that faces the display space K. Thus, the speed of movement (deformation) of the polar liquid 12 can be improved.

In each pixel of the display element 2 having the above configuration, as shown in FIG. 5A, when the oil 13 is held under the aperture 10a, light from the backlight 16 is blocked by the oil 13, so that the black display is performed. On the other hand, as shown in FIG. 5B, when the oil 13 is held under the black matrix 10s, light from the backlight 16 is not blocked by the oil 13 and passes through the aperture 10a, so that the white display is performed with the light of the backlight 16.

Hereinafter, a display operation of the image display apparatus 1 of this embodiment having the above configuration will be described in detail.

In FIG. 1, the display control portion 3 allows the gate driver 5 to output the gate signals to the gate lines G in sequence in a predetermined scanning direction, e.g., from the top to the bottom of FIG. 1, thereby bringing the thin film transistors SW into the ON state. Subsequently, when the thin film transistors SW are in the ON state, the display control portion 3 allows the source driver 4 to output the source signals (voltage signals) to the corresponding source lines S in accordance with the video signal. Thus, in each of the corresponding pixels, the voltage from the source line S is applied to the pixel electrode 8, and a charge is stored in the capacitor C (dielectric layer 14). The capacitor C maintains the stored charge for a period of time required to scan one frame until the gate line G of the next frame is selected.

In the display element 2, when the black display is performed as shown in FIG. 5A, the source signal is output from the source driver 4 to the pixel electrode 8 via the source line S so that a potential difference between the pixel electrode 8 and the common electrode 9 is 0 V. Upon application of such a voltage to the pixel electrode 8, the polar liquid 12 in this pixel region P is in a state that the oil 13 having relatively high compatibility with the hydrophobic film is positioned under the aperture 10a and covers the aperture 10a completely, as shown in FIG. 5A. Thus, in the display element 2, light from the backlight 16 is blocked by the oil 13, and the black display is performed.

When the white display is performed as shown in FIG. 5B, the source signal is output from the source driver 4 to the pixel electrode 8 via the source line S so that a potential difference between the pixel electrode 8 and the common electrode 9 is a predetermined voltage value (e.g., 16 V). Upon application of such a voltage to the pixel electrode 8, a charge is accumulated on the surface of the hydrophobic film 15 to increase the hydrophilicity. Therefore, the polar liquid 12 in this pixel region P is held in a position under the aperture 10a, as shown in FIG. 5B. Thus, in the display element 2, light from the backlight 16 is not blocked by the oil 13, but allowed to be emitted to an observer (e.g., a user), and the white display is performed.

In the display element 2, when the source signal is output from the source driver 4 to the pixel electrode 8 via the source line S so that the potential difference between the pixel electrode 8 and the common electrode 9 is a voltage value in the range of 0 V to the predetermined voltage value as described above, the halftone display can be performed in accordance with the voltage value. Since the oil 13 is moved to a position under the aperture 10a in accordance with the voltage applied to the pixel electrode 8, the shielding ratio (i.e. blocking ratio) of the oil 13 to the aperture 10a is changed, and the amount of light emitted from the backlight 16 to the observer is also changed, so that the halftone display can be performed.

In the display element 2 of this embodiment having the above configuration, the effective display region P1 and the non-effective display region P2 are defined so that the polar liquid 12 is moved along the up-and-down direction in the display space K. Therefore, when the halftone display is performed, it is possible to prevent the amount of light emitted to the observer from being significantly changed with respect to the azimuth direction of the display element 2 due to the polar liquid 12 itself. Consequently, unlike the conventional example, the display element 2 of this embodiment can suppress a reduction in display quality of the halftone display no matter which azimuth direction the observer views the display from.

In particular, the display element 2 of this embodiment can minimize a reduction in display quality when it is applied to the image display apparatus (electrical device) 1 such as a color colton that is used for the advertising display in a station precinct, a funeral hall, a corner of a town, etc. and is placed with the display surface along the perpendicular direction (i.e., the direction of the force of gravity).

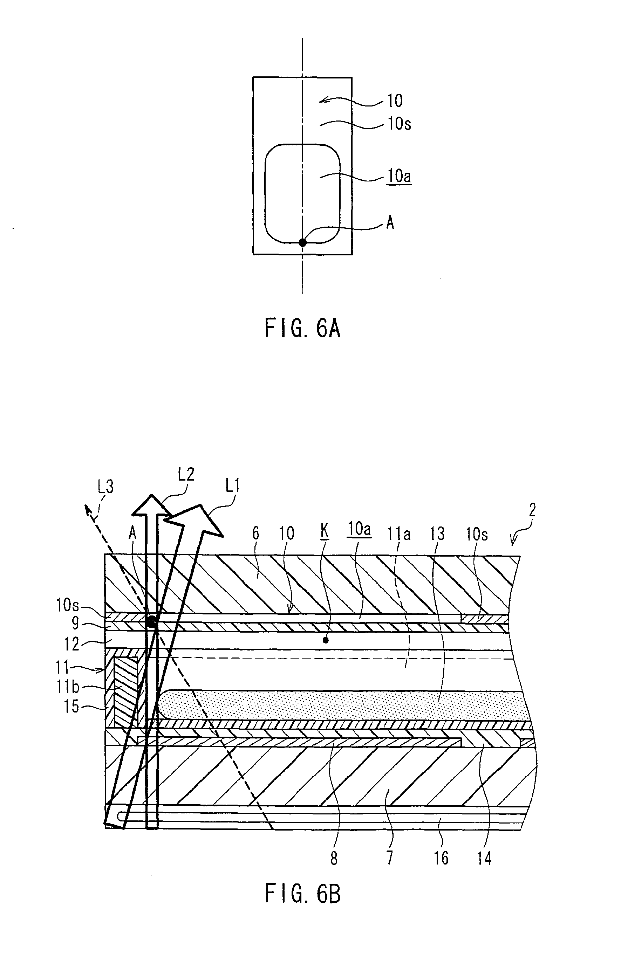

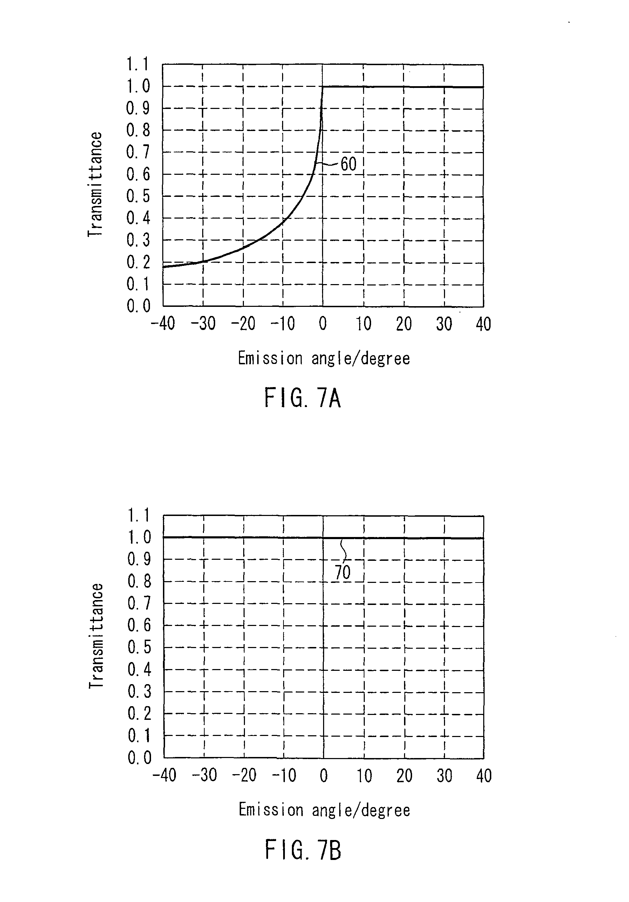

Hereinafter, the effect of the display element 2 of this embodiment will be described in detail with reference to FIGS. 6 and 7.

FIG. 6 is a diagram for explaining the viewing angle characteristics of the display element in FIG. 1. FIG. 6A is a diagram for explaining a specific viewing point. FIG. 6B is a diagram for explaining the viewing angle characteristics at different angles in the up-and-down direction. FIGS. 7A and 7B are graphs for explaining the angular dependence of the transmittance in the up-and-down direction and the lateral direction at the viewing point shown in FIG. 6A, respectively.

In order to study the above effect of the display element 2 of this embodiment, the present inventors carried out a simulation of a change in the amount of light emitted when the viewing direction was changed at a point A in FIG. 6A. In this simulation, the transmittance of light was determined as the amount of light emitted when the viewing direction was changed under the conditions that the display surface was placed along the perpendicular direction, and the end of the polar liquid 12 was located substantially under the point A, as shown in FIG. 6B (which means that somewhat halftone display rather than the complete black display was performed). Moreover, in this simulation, the concentration of the pigment of the oil 13 was 4 wt%, and the size (cell gap size) between the upper substrate 6 and the lower substrate 7 was 20 µm.

In FIG. 6B, when the point A of the display element 2 was viewed from upward in the up-and-down direction (i.e., from the direction opposite to the direction of the force of gravity), light from the backlight 16 was not blocked by the oil 13 and was emitted to the observer, as indicated by the arrow L1. Thus, the observer was able to recognize the display having a luminance in accordance with the emitted light.

Moreover, in FIG. 6B, when the point A of the display element 2 was viewed from the direction that was at right angles to the up-and-down direction (i.e., from the direction perpendicular to the display surface), light from the backlight 16 was not blocked by the oil 13 and was emitted to the observer, as indicated by the arrow L2. Thus, the observer was able to recognize the display having a luminance in accordance with the emitted light.

On the other hand, in FIG. 6B, when the point A of the display element 2 was viewed from downward in the up-and-down direction (i.e., from the direction of the force of gravity), light from the backlight 16 was blocked by the oil 13 and was not emitted to the observer, as indicated by the arrow L3. Thus, the observer was not able to recognize the display having a luminance and identified it as black display.

FIG. 7A shows the results of the simulation of the angular dependence of the transmittance when the viewing direction was changed at the point A. In this case, the direction that is at right angles to the up-and-down direction (i.e., the direction perpendicular to the display surface), from which the point A of the display element 2 is viewed, namely the direction indicated by the arrow L2 in FIG. 6B is set at an angle of 0°, and "positive" values correspond to the direction pointing upward in the up-and-down direction and "negative" values correspond to the direction pointing downward in the up-and-down direction. As indicated by a curve 60 in FIG. 7A, even if the viewing direction is changed upward in the up-and-down direction, light from the backlight 16 is not blocked by the oil 13, and the transmittance remains the same as that obtained at an angle of 0° (represented by "1" on the curve 60). In contrast, as indicated by the curve 60, more light from the backlight 16 is blocked by the oil 13 as the viewing direction is changed downward in the up-and-down direction, and the transmittance is reduced.

As described above, in the display element 2 of this embodiment, since the effective display region P1 and the non-effective display region P2 are defined so that the polar liquid 12 and the oil 13 are moved along the up-and-down direction in the display space K, there is the angular dependence of the transmittance in the up-and-down direction.

On the other hand, when the viewing direction is changed at the point A in the lateral direction of the display surface (i.e., in the direction perpendicular to the sheet of FIG. 6B), light from the backlight 16 will not be blocked by the oil 13. Specifically, as is evident from the results of the simulation indicated by a straight line 70 in FIG. 7B, even if the viewing direction is changed in the lateral direction of the display surface, light from the backlight 16 is not blocked by the oil 13, and all the values of the transmittance are the same. Thus, in the display element 2 of this embodiment, there is no angular dependence of the transmittance in the lateral direction of the display surface. The above results confirmed that when the display element 2 of this embodiment is applied to the image display apparatus (electrical device) 1 such as the color colton described above, it is possible to prevent a significant change in the amount of light emitted to the observer depending on the viewing direction of the observer, and also to minimize a reduction in display quality.

In the display element 2 of this embodiment, since the non-effective display region P2 is defined by the black matrix (light-shielding film) 10s provided on the upper substrate 6 and the effective display region P1 is defined by the aperture 10a, the effective display region P1 and the non-effective display region P2 can be properly and reliably defined with respect to the display space K.

In the display element 2 of this embodiment, the source lines (data lines) S and the gate lines G are provided on the lower substrate 7 in the form of a matrix, and the planar common electrode (transparent electrode) 9 is provided on the upper substrate 6. Moreover, the pixel regions P are located at each of the intersections of the source lines S and the gate lines G, and the display space K of each of the pixel regions P is partitioned by the ribs (partitions) 11 having an appropriate height. Further, the thin film transistor (switching element) SW, the pixel electrode (second electrode) 8, and the dielectric layer (capacitor) 14 are provided in each of the pixel regions P of the display element 2. Thus, this embodiment can provide a matrix-driven display element 2 with excellent display quality.

In the image display apparatus (electrical device) 1 of this embodiment, the display portion uses the display element 2 that can suppress a reduction in display quality of the halftone display no matter which azimuth direction the observer views the display from. Thus, the image display apparatus 1 with excellent display performance can be easily provided.

### [Embodiment 2]

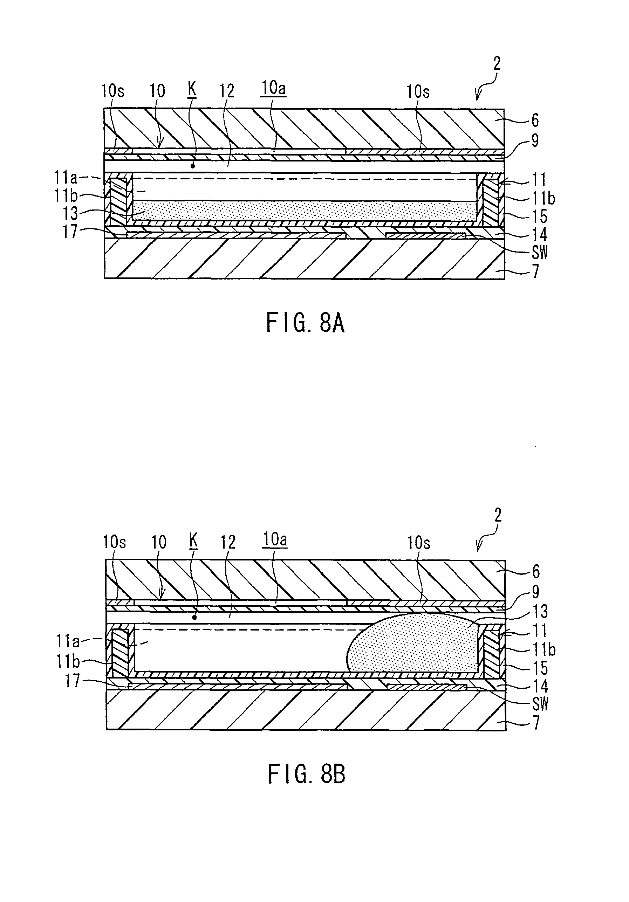

FIGS. 8A and 8B are cross-sectional views showing the main configuration of a display element of Embodiment 2 of the present invention during black display and white display, respectively. In FIGS. 8A and 8B, this embodiment mainly differs from Embodiment 1 in that reflecting electrodes are used as the pixel electrodes (second electrodes). The same components as those of Embodiment 1 are denoted by the same reference numerals, and the explanation will not be repeated.

As shown in FIGS. 8A and 8B, in each of the pixel regions P of the display element 2 of this embodiment, a reflecting electrode 17 is provided on the lower substrate 7 as the second electrode. Unlike Embodiment 1, the backlight is removed from the display element 2 of this embodiment.

In the display element 2 of this embodiment, as shown in FIG. 8A, when the oil 13 is held under the aperture 10a, external light that has entered from the upper substrate 6 side is blocked by the oil 13, so that the black display is performed. On the other hand, as shown in FIG. 8B, when the oil 13 is held under the black matrix 10s, the external light is not blocked by the oil 13, passes through the aperture 10a, and then is reflected by the reflecting electrode 17 to the outside, so that the white display is performed with the external light.

With the above configuration, this embodiment can have effects comparable to those of Embodiment 1. Moreover, since the reflecting electrodes 17 are used as the pixel electrodes (second electrodes), the light from the outside of the display element 2 can be used to display the information. Thus, this embodiment can eliminate the placement of the backlight and easily provide a compact display element 2 with low power consumption.

### [Embodiment 3]

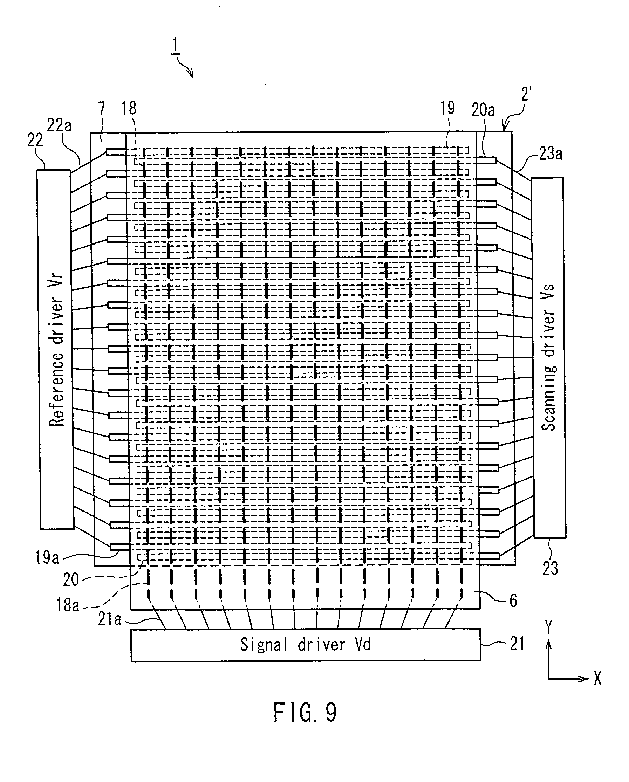

FIG. 9 is a plan view for explaining a display element and an image display apparatus of Embodiment 3 of the present invention. In FIG. 9, this embodiment mainly differs from Embodiment 1 in that signal electrodes are used as the first electrodes, and reference electrodes and scanning electrodes are used as the second electrodes. The same components as those of Embodiment 1 are denoted by the same reference numerals, and the explanation will not be repeated.

As shown in FIG. 9, an image display apparatus 1 of this embodiment includes a display portion using a display element 2' of this embodiment. The display portion has a rectangular display surface. In the display element 2' of this embodiment, similarly to Embodiment 1, the overlap between the upper substrate 6 and the lower substrate 7 forms an effective display region of the display surface (as will be described in detail later).

In the display element 2', a plurality of signal electrodes 18 are spaced at predetermined intervals and arranged in stripes in the Y direction. Moreover, in the display element 2', a plurality of reference electrodes 19 and a plurality of scanning electrodes 20 are alternately arranged in stripes in the X direction. The plurality of the signal electrodes 18 intersect with the plurality of the reference electrodes 19 and the plurality of the scanning electrodes 20, and a plurality of pixel regions are located at each of the intersections of the signal electrodes 18 and the scanning electrodes 20.

The signal electrodes 18, the reference electrodes 19, and the scanning electrodes 20 are configured so that voltages can be independently applied to these electrodes, and the voltages fall in a predetermined voltage range between a High voltage (referred to as "H voltage" in the following) that serves as a first voltage and a Low voltage (referred to as "L voltage" in the following) that serves as a second voltage (as will be described in detail later).

In the display element 2', the pixel regions are separated from one another by partitions, as will be described in detail later. The display element 2' changes the display color on the display surface by moving a polar liquid 12' (as will be described later) for each of a plurality of pixels (display cells) arranged in a matrix using an electrowetting phenomenon.

One end of the signal electrodes 18, the reference electrodes 19, and the scanning electrodes 20 are extended to the outside of the effective display region of the display surface and form terminals 18a, 19a, and 20a, respectively.

A signal driver 21 is connected to the individual terminals 18a of the signal electrodes 18 via wires 21a. The signal driver 21 constitutes a signal voltage application portion and applies a signal voltage Vd to each of the signal electrodes 18 in accordance with information when the image display apparatus 1 displays the information including characters and images on the display surface.

A reference driver 22 is connected to the individual terminals 19a of the reference electrodes 19 via wires 22a. The reference driver 22 constitutes a reference voltage application portion and applies a reference voltage Vr to each of the reference electrodes 19 when the image display apparatus 1 displays the information including characters and images on the display surface.

A scanning driver 23 is connected to the individual terminals 20a of the scanning electrodes 20 via wires 23a. The scanning driver 23 constitutes a scanning voltage application portion and applies a scanning voltage Vs to each of the scanning electrodes 20 when the image display apparatus 1 displays the information including characters and images on the display surface.

The scanning driver 23 applies either a non-selected voltage or a selected voltage to each of the scanning electrodes 20 as the scanning voltage Vs. The non-selected voltage inhibits the movement of the polar liquid and the selected voltage allows the polar liquid to move in accordance with the signal voltage Vd. Moreover, the reference driver 22 is operated with reference to the operation of the scanning driver 23. The reference driver 22 applies either the non-selected voltage that inhibits the movement of the polar liquid or the selected voltage that allows the polar liquid to move in accordance with the signal voltage Vd to each of the reference electrodes 19 as the reference voltage Vr.

In the image display apparatus 1, the scanning driver 23 applies the selected voltage to each of the scanning electrodes 20 in sequence, e.g., from the top to the bottom of FIG. 9, and the reference driver 22 applies the selected voltage to each of the reference electrodes 19 in sequence from the top to the bottom of FIG. 9 in synchronization with the operation of the scanning driver 23. Thus, the scanning driver 23 and the reference driver 22 perform their respective scanning operations for each line (as will be described in detail later).

The signal driver 21, the reference driver 22, and the scanning driver 23 include a direct-current power supply or an alternating-current power supply that supplies the signal voltage Vd, the reference voltage Vr, and the scanning voltage Vs, respectively.

The reference driver 22 switches the polarity of the reference voltage Vr at predetermined time intervals (e.g., 1 frame). Moreover, the scanning driver 23 switches the polarity of the scanning voltage Vs in accordance with the switching of the polarity of the reference voltage Vr. Thus, since the polarities of the reference voltage Vr and the scanning voltage Vs are switched at predetermined time intervals, the localization of charges in the reference electrodes 19 and the scanning electrodes 20 can be prevented, compared to the case where the voltages with the same polarity are always applied to the reference electrodes 19 and the scanning electrodes 20. Moreover, it is possible to prevent the adverse effects of a display failure (after-image phenomenon) and low reliability (a reduction in life) due to the localization of charges.

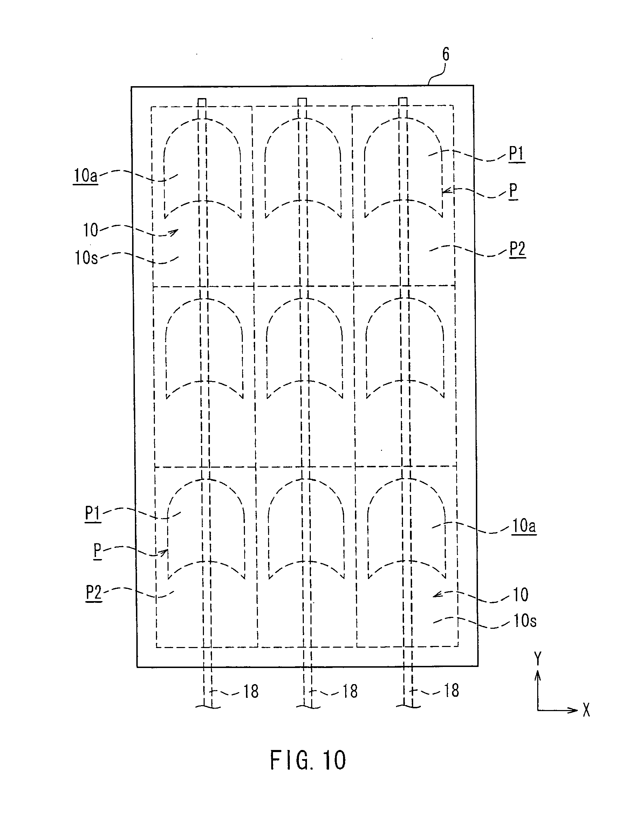

The pixel structure of the display element 2' will be described in detail with reference to FIGS. 10 to 12 as well as FIG. 9.

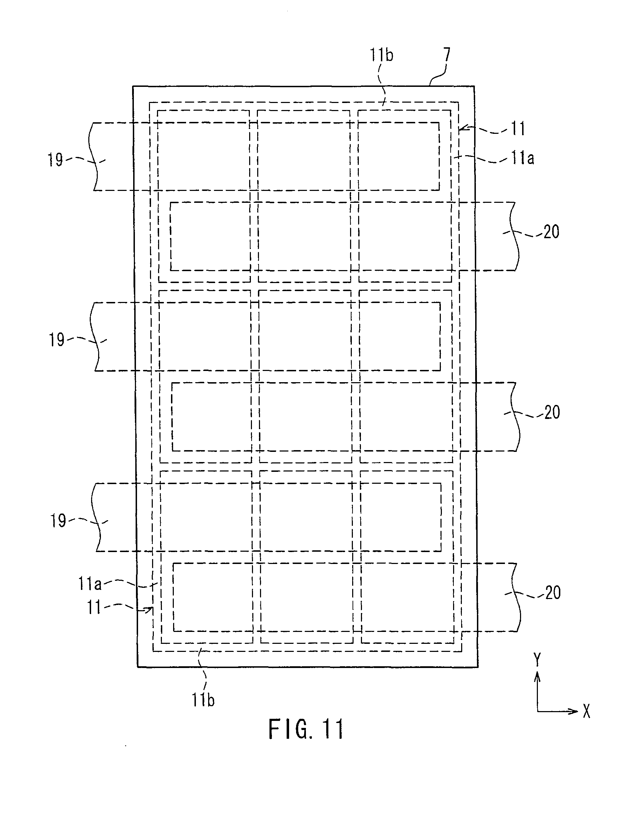

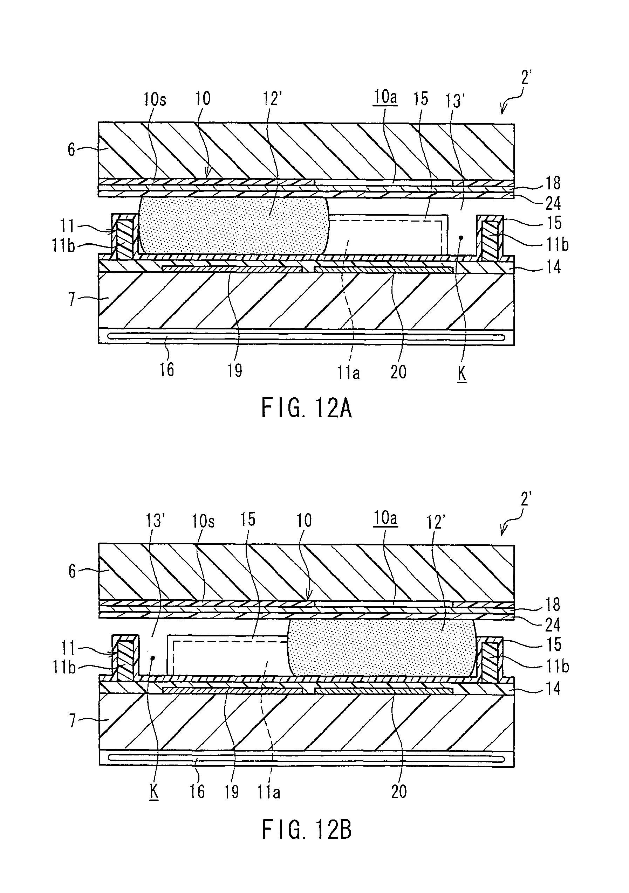

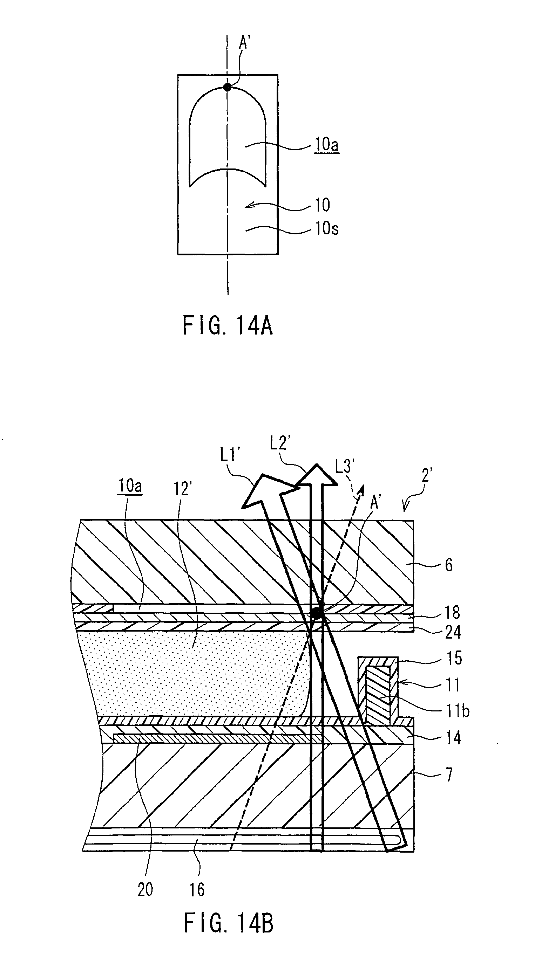

FIG. 10 is an enlarged plan view showing the main configuration of the upper substrate in FIG. 9 when viewed from the display surface side. FIG. 11 is an enlarged plan view showing the main configuration of the lower substrate in FIG. 9 when viewed from the non-display surface side. FIGS. 12A and 12B are cross-sectional views showing the main configuration of the display element in FIG. 9 during black display and white display, respectively. For the sake of simplification, FIGS. 10 and 11 show nine pixels placed at the upper left corner of the plurality of pixels on the display surface in FIG. 9 (the same is true for FIG. 14 in the following).

In FIGS. 10 to 12, similarly to Embodiment 1, the display element 2' includes the upper substrate 6 that is provided on the display surface side and serves as a first substrate, and the lower substrate 7 that is provided on the back (i.e., the non-display surface side) of the upper substrate 6 and serves as a second substrate. In the display element 2', the predetermined display space K is formed between the upper substrate 6 and the lower substrate 7. The polar liquid 12' and an oil 13' are sealed in the display space K and can be moved in the Y direction (the vertical/lateral direction of FIG. 10). The polar liquid 12' can be moved toward the effective display region P1 or the non-effective display region P2.

In the display element 2' of this embodiment, unlike Embodiment 1, the polar liquid 12' is colored, e.g., black with a self-dispersible pigment, while the oil 13' is colorless and transparent. Thus, in the display element 2' of this embodiment, the polar liquid 12' functions as a shutter that allows or prevents light transmission in each pixel.

In each pixel of the display element 2' of this embodiment, when polar liquid 12' is slidably moved in the display space K toward the reference electrode 19 (i.e., the effective display region P1) or the scanning electrode 20 (i.e., the non-effective display region P2), the display color is changed to black or white accordingly, as will be described in detail later.

The light-shielding layer 10, the signal electrodes 18 serving as first electrodes, and a hydrophobic film 24 are formed in this order on the surface of the upper substrate 6 that faces the non-display surface side.

The reference electrodes 19 and the scanning electrodes 20, both serving as the second electrodes, are formed on the surface of the lower substrate 7 that faces the display surface side. Moreover, the dielectric layer 14 is formed to cover the reference electrodes 19 and the scanning electrodes 20. Similarly to Embodiment 1, the ribs 11 are formed on the surface of the dielectric layer 14 that faces the display surface side. The ribs 11 have the first rib members 11a parallel to the Y direction and the second rib members 11b parallel to the X direction. In the lower substrate 7, the hydrophobic film 15 is further formed to cover the dielectric layer 14 and the ribs 11.

Similarly to Embodiment 1, the light-shielding layer 10 includes the black matrix 10s serving as the light-shielding film and the apertures 10a having a predetermined shape.

As shown in FIG. 10, in each of the pixel regions P of the display element 2', the aperture 10a is provided in a portion corresponding to the effective display region P1 of a pixel, and the black matrix 10s is provided in a portion corresponding to the non-effective display region P2 of the pixel. In other words, similarly to Embodiment 1, with respect to the display space K, the non-effective display region (non-aperture region) P2 is defined by the black matrix (light-shielding film) 10s and the effective display region P1 is defined by the aperture 10a formed in that black matrix 10s.

Moreover, in the display element 2', the effective display region P1 and the non-effective display region P2 are defined so that the polar liquid 12' is moved along the up-and-down direction in the display space K. Specifically, when the image display apparatus 1 is placed with the vertical direction (Y direction) of the display surface substantially parallel to the perpendicular direction, the effective display region P1 and the non-effective display region P2 in the display element 2' are also substantially parallel to the perpendicular direction.

In the display element 2', similarly to Embodiment 1, the area of the aperture 10a is the same as or slightly smaller than that of the effective display region P1. On the other hand, the area of the black matrix 10s is the same as or slightly larger than that of the non-effective display region P2. In FIG. 10, the boundary between two black matrixes 10s corresponding to the adjacent pixels is indicated by a dotted line to clarify the boundary between the adjacent pixels. Actually, however, no boundary is present between the black matrixes 10s of the light-shielding layer 10.

In the display element 2', similarly to Embodiment 1, the display space K is divided into the pixel regions P by the ribs 11 serving as the partitions as described above. Specifically, as shown in FIG. 11, the display space K of each pixel is partitioned by two opposing first rib members 11a having an appropriate height and two opposing second rib members 11b having an appropriate height. Moreover, in the display element 2', similarly to Embodiment 1, the first and second rib members 11a, 11b prevent the polar liquid 12' from flowing easily into the display space K of the adjacent pixel regions P. The first and second rib members 11a, 11b are made of, e.g., a negative photo-curable resin and have optical transparency. The height of the first and second rib members 11a, 11b protruding from the dielectric layer 14 is determined so as to prevent the flow of the polar liquid 12' between the adjacent pixels.

The reference electrodes 19 and the scanning electrodes 20 are made of, e.g., transparent electrode materials such as indium oxides (ITO), tin oxides (SnO₂), and zinc oxides (AZO, GZO, or IZO). The reference electrodes 19 and the scanning electrodes 20 are formed in stripes on the lower substrate 7 by a known film forming method such as sputtering.

The signal electrodes 18 can be, e.g., linear wiring that is arranged parallel to the Y direction. The signal electrodes 18 are made of a transparent electrode material such as ITO. Moreover, the signal electrodes 18 are placed on the light-shielding layer 10 so as to extend substantially through the center of each of the pixel regions P in the X direction, and further to come into electrical contact with the polar liquid 12' via the hydrophobic film 24. This can improve the responsibility of the polar liquid 12' during a display operation.

The hydrophobic film 24 is made of, e.g., a transparent synthetic resin, and preferably a fluoro polymer that functions as a hydrophilic layer for the polar liquid 12' when a voltage is applied. This can significantly change the wettability (contact angle) between the polar liquid 12' and the surface of the hydrophobic film 24 on the upper substrate 6 that faces the display space K. Thus, the speed of movement (deformation) of the polar liquid 12' can be improved.

In each pixel of the display element 2' having the above configuration, as shown in FIG. 12A, when the polar liquid 12' is held between the black matrix 10s and the reference electrode 19, light from the backlight 16 is not blocked by the polar liquid 12' and passes through the aperture 10a, so that the white display is performed with the light of the backlight 16. On the other hand, as shown in FIG. 12B, when the polar liquid 12' is held between the aperture 10a and the scanning electrode 20, light from the backlight 16 is blocked by the polar liquid 12', so that the black display is performed.

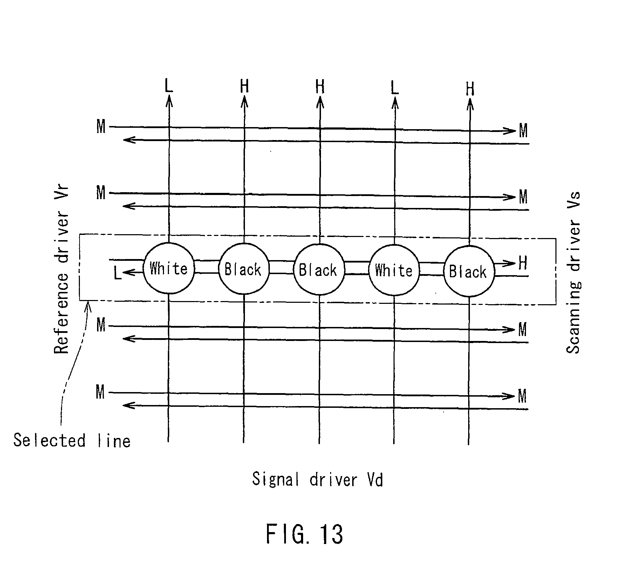

Hereinafter, a display operation of the image display apparatus 1 of this embodiment having the above configuration will be described in detail with reference to FIG. 13 as well as FIGS. 9 to 12.

FIG. 13 is a diagram for explaining an operation example of the image display apparatus in FIG. 9.

In FIG. 13, the reference driver 22 and the scanning driver 23 apply the selected voltages (i.e., the reference voltage Vr and the scanning voltage Vs) to the reference electrodes 19 and the scanning electrodes 20 in sequence in a predetermined scanning direction, e.g., from the top to the bottom of FIG. 13, respectively. Specifically, the reference driver 22 and the scanning driver 23 perform their scanning operations to determine a selected line by applying the H voltage (first voltage) and the L voltage (second voltage) as the selected voltages to the reference electrodes 19 and the scanning electrodes 20 in sequence, respectively. In this selected line, the signal driver 21 applies the H or L voltage (i.e., the signal voltage Vd) to the corresponding signal electrodes 18 in accordance with the external image input signal. Thus, in each of the pixels of the selected line, the polar liquid 12' is moved toward the effective display region P1 or the non-effective display region P2, and the display color on the display surface is changed accordingly.

On the other hand, the reference driver 22 and the scanning driver 23 apply the non-selected voltages (i.e., the reference voltage Vr and the scanning voltage Vs) to non-selected lines, namely to all the remaining reference electrodes 19 and scanning electrodes 20, respectively. Specifically, the reference driver 22 and the scanning driver 23 apply, e.g., intermediate voltages (Middle voltages, referred to as "M voltages" in the following) between the H voltage and the L voltage as the non-selected voltages to all the remaining reference electrodes 19 and scanning electrodes 20, respectively. Thus, in each of the pixels of the non-selected lines, the polar liquid 12' stands still without unnecessary displacement from the effective display region P1 or the non-effective display region P2, and the display color on the display surface is unchanged.

Table 1 shows the combinations of the voltages applied to the reference electrodes 19, the scanning electrodes 20, and the signal electrodes 18 in the above display operation. As shown in Table 1, the behavior of the polar liquid 12' and the display color on the display surface depend on the applied voltages. In Table 1, the H voltage, the L voltage, and the M voltage are abbreviated to "H", "L", and "M", respectively (the same is true for Tables 2 to 4 in the following). The specific values of the H voltage, the L voltage, and the M voltage are, e.g., + 16 V, 0 V, and + 8 V, respectively.

[TABLE 1]

| | Reference electrode | Scanning electrode | Signal electrode | Behavior of polar liquid and display color on display surface |
|---|---|---|---|---|
| Selected line | H | L | H | The polar liquid is moved toward the scanning electrode. Black display |
| | | | L | The polar liquid is moved toward the reference electrode. White display |
| Non-selected line | M | M | H | The polar liquid is still (not moving). |
| | | | L | White or black display |

### < Selected line operation >

In the selected line, e.g., when the H voltage is applied to the signal electrodes 18, there is no potential difference between the reference electrode 19 and the signal electrodes 18 because the H voltage is applied to both of these electrodes. On the other hand, a potential difference between the signal electrodes 18 and the scanning electrode 20 occurs because the L voltage is applied to the scanning electrode 20. Therefore, the polar liquid 12' is moved in the display space K toward the scanning electrode 20 that makes a potential difference from the signal electrodes 18. Consequently, the polar liquid 12' has been moved to the effective display region P1 side, as shown in FIG. 12B, and prevents the illumination light emitted from the backlight 16 from reaching the aperture 10a by shifting the oil 13' toward the reference electrode 19. Thus, the display color on the display surface becomes black display due to the presence of the polar liquid 12'.

In the selected line, when the L voltage is applied to the signal electrodes 18, a potential difference occurs between the reference electrode 19 and the signal electrodes 18, but not between the signal electrodes 18 and the scanning electrode 20. Therefore, the polar liquid 12' is moved in the display space K toward the reference electrode 19 that makes a potential difference from the signal electrodes 18. Consequently, the polar liquid 12' has been moved to the non-effective display region P2 side, as shown in FIG. 12A, and allows the illumination light emitted from the backlight 16 to reach the aperture 10a. Thus, the display color on the display surface becomes white display due to the illumination light.

### < Non-selected line operation >

In the non-selected lines, e.g., when the H voltage is applied to the signal electrodes 18, the polar liquid 12' stands still in the same position, and the current display color is maintained. Since the M voltages are applied to both the reference electrodes 19 and the scanning electrodes 20, the potential difference between the reference electrodes 19 and the signal electrodes 18 is the same as that between the scanning electrodes 20 and the signal electrodes 18. Consequently, the display color is maintained without changing from the black display or the white display in the current state.

Similarly, in the non-selected lines, even when the L voltage is applied to the signal electrodes 18, the polar liquid 12' stands still in the same position, and the current display color is maintained. Since the M voltages are applied to both the reference electrodes 19 and the scanning electrodes 20, the potential difference between the reference electrodes 19 and the signal electrodes 18 is the same as that between the scanning electrodes 20 and the signal electrodes 18.

As described above, in the non-selected lines, the polar liquid 12' is not moved, but stands still and the display color on the display surface is unchanged regardless of whether the H or L voltage is applied to the signal electrodes 18.

On the other hand, in the selected line, the polar liquid 12' can be moved in accordance with the voltage applied to the signal electrodes 18, as described above, and the display color on the display surface can be changed accordingly.

In the image display apparatus 1, depending on the combinations of the applied voltages in Table 1, the display color of each pixel on the selected line can be, e.g., white due to the illumination light or black due to the polar liquid 12' in accordance with the voltage applied to the signal electrodes 18 corresponding to the individual pixels, as shown in FIG. 13. When the reference driver 22 and the scanning driver 23 determine a selected line of the reference electrode 19 and the scanning electrode 20 by performing their scanning operations, e.g., from the top to the bottom of FIG. 13, the display colors of the pixels in the display portion of the image display apparatus 1 are also changed in sequence from the top to the bottom of FIG. 13. Therefore, if the reference driver 22 and the scanning driver 23 perform the scanning operations at a high speed, the display colors of the pixels in the display portion of the image display apparatus 1 also can be changed at a high speed. Moreover, by applying the signal voltage Vd to the signal electrodes 18 in synchronization with the scanning operation for the selected line, the image display apparatus 1 can display various information including dynamic images based on the external image input signal.

The combinations of the voltages applied to the reference electrodes 19, the scanning electrodes 20, and the signal electrodes 18 are not limited to Table 1, and may be as shown in Table 2.

[TABLE 2]

| | Reference electrode | Scanning electrode | Signal electrode | Behavior of polar liquid and display color on display surface |
|---|---|---|---|---|
| Selected line | L | H | L | The polar liquid is moved toward the scanning electrode. Black display |
| | | | H | The polar liquid is moved toward the reference electrode. White display |
| Non-selected line | M | M | H | The polar liquid is still (not moving). |
| | | | L | White or black display |

The reference driver 22 and the scanning driver 23 perform their scanning operations to determine a selected line by applying the L voltage (second voltage) and the H voltage (first voltage) as the selected voltages to the reference electrodes 19 and the scanning electrodes 20 in sequence in a predetermined scanning direction, e.g., from the top to the bottom of FIG. 13, respectively. In this selected line, the signal driver 21 applies the H or L voltage (i.e., the signal voltage Vd) to the corresponding signal electrodes 18 in accordance with the external image input signal.

On the other hand, the reference driver 22 and the scanning driver 23 apply the M voltages as the non-selected voltages to the non-selected lines, namely to all the remaining reference electrodes 19 and scanning electrodes 20.

### < Selected line operation >

In the selected line, e.g., when the L voltage is applied to the signal electrodes 18, there is no potential difference between the reference electrode 19 and the signal electrodes 18 because the L voltage is applied to both of these electrodes. On the other hand, a potential difference between the signal electrodes 18 and the scanning electrode 20 occurs because the H voltage is applied to the scanning electrode 20. Therefore, the polar liquid 12' is moved in the display space K toward the scanning electrode 20 that makes a potential difference from the signal electrodes 18. Consequently, the polar liquid 12' has been moved to the effective display region P1 side, as shown in FIG. 12B, and prevents the illumination light emitted from the backlight 16 from reaching the aperture 10a by shifting the oil 13' toward the reference electrode 19. Thus, the display color on the display surface becomes black display due to the presence of the polar liquid 12'.

In the selected line, when the H voltage is applied to the signal electrodes 18, a potential difference occurs between the reference electrode 19 and the signal electrodes 18, but not between the signal electrodes 18 and the scanning electrode 20. Therefore, the polar liquid 12' is moved in the display space K toward the reference electrode 19 that makes a potential difference from the signal electrodes 18. Consequently, the polar liquid 12' has been moved to the non-effective display region P2 side, as shown in FIG. 12A, and allows the illumination light emitted from the backlight 16 to reach the aperture 10a. Thus, the display color on the display surface becomes white display due to the illumination light.

### < Non-selected line operation >

In the non-selected lines, e.g., when the L voltage is applied to the signal electrodes 18, the polar liquid 12' stands still in the same position, and the current display color is maintained. Since the M voltages are applied to both the reference electrodes 19 and the scanning electrodes 20, the potential difference between the reference electrodes 19 and the signal electrodes 18 is the same as that between the scanning electrodes 20 and the signal electrodes 18. Consequently, the display color is maintained without changing from the black display or the white display in the current state.

Similarly, in the non-selected lines, even when the H voltage is applied to the signal electrodes 18, the polar liquid 12' stands still in the same position, and the current display color is maintained. Since the M voltages are applied to both the reference electrodes 19 and the scanning electrodes 20, the potential difference between the reference electrodes 19 and the signal electrodes 18 is the same as that between the scanning electrodes 20 and the signal electrodes 18.

In the non-selected lines, as shown in Table 2, similarly to Table 1, the polar liquid 12' is not moved, but stands still and the display color on the display surface is unchanged regardless of whether the H or L voltage is applied to the signal electrodes 18.

On the other hand, in the selected line, the polar liquid 12' can be moved in accordance with the voltage applied to the signal electrodes 18, as described above, and the display color on the display surface can be changed accordingly.

In the image display apparatus 1 of this embodiment, other than the combinations of the applied voltages shown in Tables 1 and 2, the voltage applied to the signal electrodes 18 not only has two values of the H voltage and the L voltage, but also may be changed between the H voltage and the L voltage in accordance with information to be displayed on the display surface. That is, the image display apparatus 1 can perform the gradation display by controlling the signal voltage Vd. Thus, the display element 2' can achieve excellent display performance.

With the above configuration, this embodiment can have effects comparable to those of Embodiment 1.

In the display element 2' of this embodiment having the above configuration, the effective display region P1 and the non-effective display region P2 are defined so that the polar liquid 12' is moved along the up-and-down direction in the display space K. Therefore, when the halftone display is performed, it is possible to prevent the amount of light emitted to the observer from being significantly changed with respect to the azimuth direction of the display element 2' due to the polar liquid 12' itself. Consequently, unlike the conventional example, the display element 2' of this embodiment can suppress a reduction in display quality of the halftone display no matter which azimuth direction the observer views the display from.

In particular, the display element 2' of this embodiment can minimize a reduction in display quality when it is applied to the image display apparatus (electrical device) 1 such as a color colton that is used for the advertizing display in a station precinct, a funeral hall, a corner of a town, etc. and is placed with the display surface along the perpendicular direction (i.e., the direction of the force of gravity).

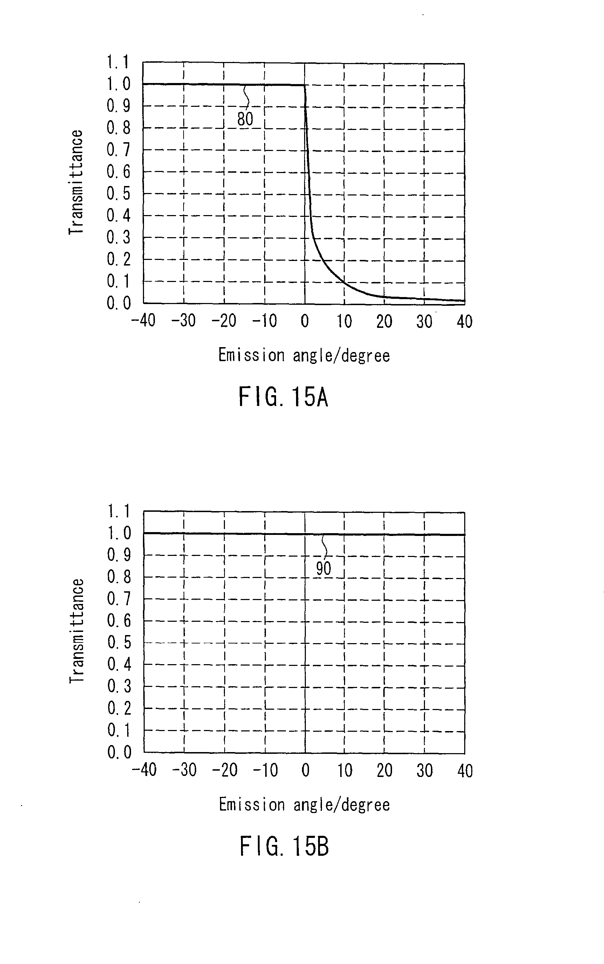

Hereinafter, the effect of the display element 2' of this embodiment will be described in detail with reference to FIGS. 14 and 15.

FIG. 14 is a diagram for explaining the viewing angle characteristics of the display element in FIG. 9. FIG. 14A is a diagram for explaining a specific viewing point. FIG. 14B is a diagram for explaining the viewing angle characteristics at different angles in the up-and-down direction. FIGS. 15A and 15B are graphs for explaining the angular dependence of the transmittance in the up-and-down direction and the lateral direction at the viewing point shown in FIG. 14A, respectively.

In order to study the above effect of the display element 2' of this embodiment, the present inventors carried out a simulation of a change in the amount of light emitted when the viewing direction was changed at a point A' in FIG. 14A. In this simulation, the transmittance of light was determined as the amount of light emitted when the viewing direction was changed under the conditions that the display surface was placed along the perpendicular direction, and the end of the polar liquid 12' was located substantially under the point A', as shown in FIG. 14B (which means that somewhat halftone display rather than the complete black display was performed). Moreover, in this simulation, the concentration of the pigment of the polar liquid 12' was 4 wt%, and the size (cell gap size) between the upper substrate 6 and the lower substrate 7 was 50 µm.

In FIG. 14B, when the point A' of the display element 2' was viewed from downward in the up-and-down direction (i.e., from the direction of the force of gravity), light from the backlight 16 was not blocked by the polar liquid 12' and was emitted to the observer, as indicated by the arrow L1'. Thus, the observer was able to recognize the display having a luminance in accordance with the emitted light.

Moreover, in FIG. 14B, when the point A' of the display element 2' was viewed from the direction that was at right angles to the up-and-down direction (i.e., from the direction perpendicular to the display surface), light from the backlight 16 was not blocked by the polar liquid 12' and was emitted to the observer, as indicated by the arrow L2'. Thus, the observer was able to recognize the display having a luminance in accordance with the emitted light.

On the other hand, in FIG. 14B, when the point A' of the display element 2' was viewed from upward in the up-and-down direction (i.e., from the direction opposite to the direction of the force of gravity), light from the backlight 16 was blocked by the polar liquid 12' and was not emitted to the observer, as indicated by the arrow L3'. Thus, the observer was not able to recognize the display having a luminance and identified it as black display.

FIG. 15A shows the results of the simulation of the angular dependence of the transmittance when the viewing direction was changed at the point A'. In this case, the direction that is at right angles to the up-and-down direction (i.e., the direction perpendicular to the display surface), from which the point A' of the display element 2' is viewed, namely the direction indicated by the arrow L2' in FIG. 14B is set at an angle of 0°, and "positive" values correspond to the direction pointing upward in the up-and-down direction and "negative" values correspond to the direction pointing downward in the up-and-down direction. As indicated by a curve 80 in FIG. 15A, even if the viewing direction is changed downward in the up-and-down direction, light from the backlight 16 is not blocked by the polar liquid 12', and the transmittance remains the same as that obtained at an angle of 0° (represented by "1" on the curve 80). In contrast, as indicated by the curve 80, more light from the backlight 16 is blocked by the polar liquid 12' as the viewing direction is changed upward in the up-and-down direction, and the transmittance is reduced.

As described above, in the display element 2' of this embodiment, since the effective display region P1 and the non-effective display region P2 are defined so that the polar liquid 12' is moved along the up-and-down direction in the display space K, there is the angular dependence of the transmittance in the up-and-down direction.

On the other hand, when the viewing direction is changed at the point A' in the lateral direction of the display surface (i.e., in the direction perpendicular to the sheet of FIG. 14B), light from the backlight 16 will not be blocked by the polar liquid 12'. Specifically, as is evident from the results of the simulation indicated by a straight line 90 in FIG. 15B, even if the viewing direction is changed in the lateral direction of the display surface, light from the backlight 16 is not blocked by the polar liquid 12', and all the values of the transmittance are the same. Thus, in the display element 2' of this embodiment, there is no angular dependence of the transmittance in the lateral direction of the display surface. The above results confirmed that when the display element 2' of this embodiment is applied to the image display apparatus (electrical device) 1 such as the color colton described above, it is possible to prevent a significant change in the amount of light emitted to the observer depending on the viewing direction of the observer, and also to minimize a reduction in display quality.

In the display element 2' of this embodiment, the first electrodes are the signal electrodes 18 placed in the display space K, and the second electrodes are the reference electrodes 19 and the scanning electrodes 20 that are provided on the lower substrate 7 and located on one of the effective display region P1 side and the non-effective display region P2 side and the other, respectively. Therefore, unlike Embodiment 1, the display element 2' of this embodiment can change the display color on the display surface without using a switching element, and thus can have a simple structure. Moreover, since three different electrodes are used to move the polar liquid 12' slidably, the display element 2' of this embodiment can achieve both a high switching speed of the display color on the display surface and electric power saving more easily than the display element in which the shape of the polar liquid 12' is changed.

In the display element 2' of this embodiment, the signal driver (signal voltage application portion) 21, the reference driver (reference voltage application portion) 22, and the scanning driver (scanning voltage application portion) 23 apply the signal voltage Vd, the reference voltage Vr, and the scanning voltage Vs to the signal electrodes 18, the reference electrodes 19, and the scanning electrodes 20, respectively. Thus, in this embodiment, a matrix-driven display element 2' with excellent display quality can be easily provided, and the display color in each of the pixel regions can be appropriately changed.

### [Embodiment 4]

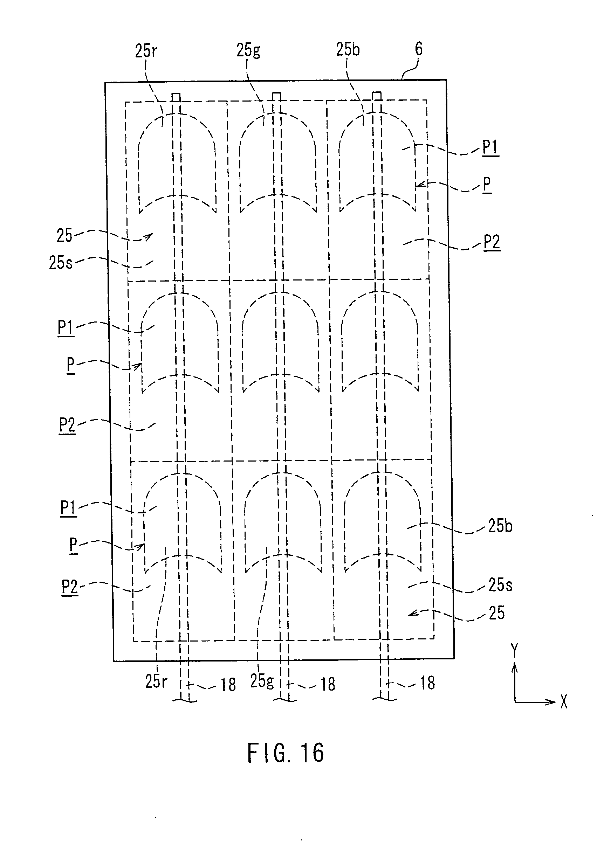

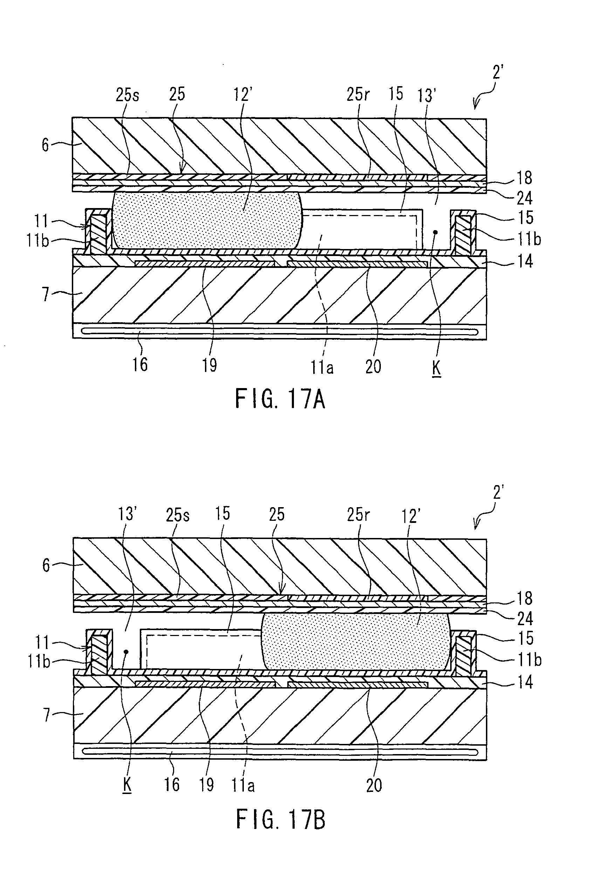

FIG. 16 is an enlarged plan view showing the main configuration of the upper substrate of a display element of Embodiment 4 of the present invention when viewed from a display surface side. FIGS. 17A and 17B are cross-sectional views showing the main configuration of the display element in FIG. 16 during non-CF color display and CF color display, respectively. In FIGS. 16, 17A and 17B, this embodiment mainly differs from Embodiment 3 in that a color filter layer having red (R), green (G), and blue (B) color filters is used instead of the light-shielding layer having the transparent apertures. The same components as those of Embodiment 3 are denoted by the same reference numerals, and the explanation will not be repeated.

As shown in FIG. 16, in the display element 2' of this embodiment, a color filter layer 25 is formed on the surface of the upper substrate 6 that faces the non-display surface side.

The color filter layer 25 includes red (R), green (G), and blue (B) color filters 25r, 25g, and 25b and a black matrix 25s serving as a light-shielding film, thereby constituting the pixels of R, G, and B colors. In the color filter layer 25, as shown in FIG. 16, the R, G, and B color filters 25r, 25g, and 25b are successively arranged in columns in the X direction, and each column includes three color filters in the Y direction. Thus, a total of nine pixels are arranged in three columns (the X direction) and three rows (the Y direction).

As shown in FIG. 16, in each of the pixel regions P of the display element 2', any of the R, G, and B color filters 25r, 25g, and 25b is provided in a portion corresponding to the effective display region P1 of a pixel, and the black matrix 25s is provided in a portion corresponding to the non-effective display region P2 of the pixel. In other words, with respect to the display space K, the non-effective display region (non-aperture region) P2 is defined by the black matrix (light-shielding film) 25s and the effective display region P1 is defined by an aperture (i.e., any of the color filters 25r, 25g, and 25b) formed in that black matrix 25s.

In the display element 2', the area of each of the color filters 25r, 25g, and 25b is the same as or slightly smaller than that of the effective display region P1. On the other hand, the area of the black matrix 25s is the same as or slightly larger than that of the non-effective display region P2. In FIG. 16, the boundary between two black matrixes 25s corresponding to the adjacent pixels is indicated by a dotted line to clarify the boundary between the adjacent pixels. Actually, however, no boundary is present between the black matrixes 25s of the color filter layer 25.

In each pixel of the display element 2' having the above configuration, as shown in FIG. 17A, when the polar liquid 12' is held between the black matrix 25s and the reference electrode 19, light from the backlight 16 is not blocked by the polar liquid 12' and passes through the color filter 25r, so that the red display (CF color display) is performed. On the other hand, as shown in FIG. 17B, when the polar liquid 12' is held between the color filter 25r and the scanning electrode 20, light from the backlight 16 is blocked by the polar liquid 12', so that the black display (non-CF color display) is performed.

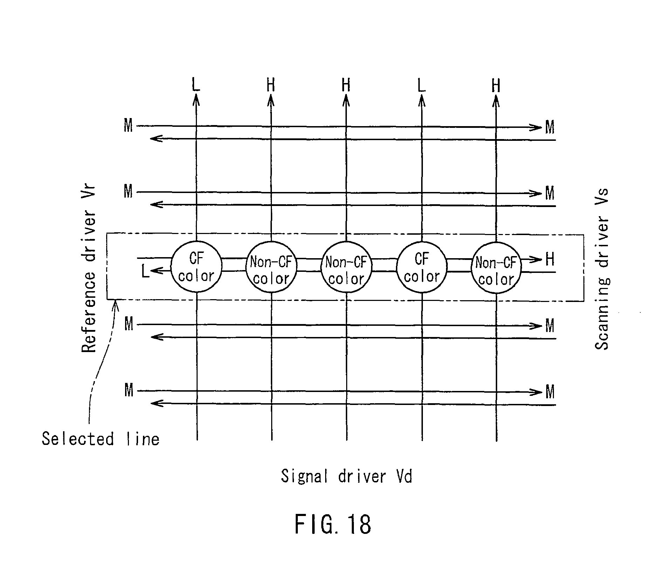

Hereinafter, a display operation of the image display apparatus 1 of this embodiment having the above configuration will be described in detail with reference to FIG. 18 as well as FIGS. 16, 17A, and 17B.

FIG.18 is a diagram for explaining an operation example of the image display apparatus using the display element in FIG. 16.

In FIG. 18, the reference driver 22 and the scanning driver 23 apply the selected voltages (i.e., the reference voltage Vr and the scanning voltage Vs) to the reference electrodes 19 and the scanning electrodes 20 in sequence in a predetermined scanning direction, e.g., from the top to the bottom of FIG. 18, respectively. Specifically, the reference driver 22 and the scanning driver 23 perform their scanning operations to determine a selected line by applying the H voltage (first voltage) and the L voltage (second voltage) as the selected voltages to the reference electrodes 19 and the scanning electrodes 20 in sequence, respectively. In this selected line, the signal driver 21 applies the H or L voltage (i.e., the signal voltage Vd) to the corresponding signal electrodes 18 in accordance with the external image input signal. Thus, in each of the pixels of the selected line, the polar liquid 12' is moved toward the effective display region P1 or the non-effective display region P2, and the display color on the display surface is changed accordingly.

On the other hand, the reference driver 22 and the scanning driver 23 apply the non-selected voltages (i.e., the reference voltage Vr and the scanning voltage Vs) to non-selected lines, namely to all the remaining reference electrodes 19 and scanning electrodes 20, respectively. Specifically, the reference driver 22 and the scanning driver 23 apply, e.g., intermediate voltages (Middle voltages, referred to as "M voltages" in the following) between the H voltage and the L voltage as the non-selected voltages to all the remaining reference electrodes 19 and scanning electrodes 20, respectively. Thus, in each of the pixels of the non-selected lines, the polar liquid 12' stands still without unnecessary displacement from the effective display region P1 or the non-effective display region P2, and the display color on the display surface is unchanged.

Table 3 shows the combinations of the voltages applied to the reference electrodes 19, the scanning electrodes 20, and the signal electrodes 18 in the above display operation. As shown in Table 3, the behavior of the polar liquid 12' and the display color on the display surface depend on the applied voltages.

[TABLE 3]

| | Reference electrode | Scanning electrode | Signal electrode | Behavior of polar liquid and display color on display surface |
|---|---|---|---|---|
| Selected line | H | L | H | The polar liquid is moved toward the scanning electrode. Black display |
| | | | L | The polar liquid is moved toward the reference electrode. CF color display |
| Non-selected line | M | M | H | The polar liquid is still (not moving). |
| | | | L | CF color display or black |

### < Selected line operation >

In the selected line, e.g., when the H voltage is applied to the signal electrodes 18, there is no potential difference between the reference electrode 19 and the signal electrodes 18 because the H voltage is applied to both of these electrodes. On the other hand, a potential difference between the signal electrodes 18 and the scanning electrode 20 occurs because the L voltage is applied to the scanning electrode 20. Therefore, the polar liquid 12' is moved in the display space K toward the scanning electrode 20 that makes a potential difference from the signal electrodes 18. Consequently, the polar liquid 12' has been moved to the effective display region P1 side, as shown in FIG. 17B, and prevents the illumination light emitted from the backlight 16 from reaching the color filter 25r by shifting the oil 13 toward the reference electrode 19. Thus, the display color on the display surface becomes black display (i.e., the non-CF color display) due to the presence of the polar liquid 12'.

In the selected line, when the L voltage is applied to the signal electrodes 18, a potential difference occurs between the reference electrode 19 and the signal electrodes 18, but not between the signal electrodes 18 and the scanning electrode 20. Therefore, the polar liquid 12' is moved in the display space K toward the reference electrode 19 that makes a potential difference from the signal electrodes 18. Consequently, the polar liquid 12' has been moved to the non-effective display region P2 side, as shown in FIG. 17A, and allows the illumination light emitted from the backlight 16 to reach the color filter 25r. Thus, the display color on the display surface becomes red display (i.e., the CF color display) due to the color filter 25r. In the image display apparatus 1, when the CF color display is performed in all the three adjacent R, G, and B pixels as a result of the movement of the polar liquid 12' toward the non-effective display region P2, the red, green, and blue colors of light from the corresponding R, G, and B pixels are mixed into white light, resulting in the white display.

### < Non-selected line operation >

In the non-selected lines, e.g., when the H voltage is applied to the signal electrodes 18, the polar liquid 12' stands still in the same position, and the current display color is maintained. Since the M voltages are applied to both the reference electrodes 19 and the scanning electrodes 20, the potential difference between the reference electrodes 19 and the signal electrodes 18 is the same as that between the scanning electrodes 20 and the signal electrodes 18. Consequently, the display color is maintained without changing from the black display or the CF color display in the current state.

Similarly, in the non-selected lines, even when the L voltage is applied to the signal electrodes 18, the polar liquid 12' stands still in the same position, and the current display color is maintained. Since the M voltages are applied to both the reference electrodes 19 and the scanning electrodes 20, the potential difference between the reference electrodes 19 and the signal electrodes 18 is the same as that between the scanning electrodes 20 and the signal electrodes 18.

As described above, in the non-selected lines, the polar liquid 12' is not moved, but stands still and the display color on the display surface is unchanged regardless of whether the H or L voltage is applied to the signal electrodes 18.

On the other hand, in the selected line, the polar liquid 12' can be moved in accordance with the voltage applied to the signal electrodes 18, as described above, and the display color on the display surface can be changed accordingly.

In the image display apparatus 1, depending on the combinations of the applied voltages in Table 1, the display color of each pixel on the selected line can be, e.g., the CF colors (red, green, or blue) produced by the color filters 25r, 25g, and 25b or the non-CF color (black) due to the polar liquid 12' in accordance with the voltage applied to the signal electrodes 18 corresponding to the individual pixels, as shown in FIG. 18. When the reference driver 22 and the scanning driver 23 determine a selected line of the reference electrode 19 and the scanning electrode 20 by performing their scanning operations, e.g., from the top to the bottom of FIG. 18, the display colors of the pixels in the display portion of the image display apparatus 1 are also changed in sequence from the top to the bottom of FIG. 18. Therefore, if the reference driver 22 and the scanning driver 23 perform the scanning operations at a high speed, the display colors of the pixels in the display portion of the image display apparatus 1 also can be changed at a high speed. Moreover, by applying the signal voltage Vd to the signal electrodes 18 in synchronization with the scanning operation for the selected line, the image display apparatus 1 can display various information including dynamic images based on the external image input signal.

The combinations of the voltages applied to the reference electrodes 19, the scanning electrodes 20, and the signal electrodes 18 are not limited to Table 3, and may be as shown in Table 4.

[TABLE 4]

| | Reference electrode | Scanning electrode | Signal electrode | Behavior of polar liquid and display color on display surface |
|---|---|---|---|---|
| Selected line | L | H | L | The polar liquid is moved toward the scanning electrode. Black display |
| | | | H | The polar liquid is moved toward the reference electrode. CF color display |
| Non-selected line | M | M | H | The polar liquid is still (not moving). |
| | | | L | CF color display or black |

The reference driver 22 and the scanning driver 23 perform their scanning operations to determine a selected line by applying the L voltage (second voltage) and the H voltage (first voltage) as the selected voltages to the reference electrodes 19 and the scanning electrodes 20 in sequence in a predetermined scanning direction, e.g., from the top to the bottom of FIG. 18, respectively. In this selected line, the signal driver 21 applies the H or L voltage (i.e., the signal voltage Vd) to the corresponding signal electrodes 18 in accordance with the external image input signal.

On the other hand, the reference driver 22 and the scanning driver 23 apply the M voltages as the non-selected voltages to the non-selected lines, namely to all the remaining reference electrodes 19 and scanning electrodes 20.

### < Selected line operation >

In the selected line, e.g., when the L voltage is applied to the signal electrodes 18, there is no potential difference between the reference electrode 19 and the signal electrodes 18 because the L voltage is applied to both of these electrodes. On the other hand, a potential difference between the signal electrodes 18 and the scanning electrode 20 occurs because the H voltage is applied to the scanning electrode 20. Therefore, the polar liquid 12' is moved in the display space K toward the scanning electrode 20 that makes a potential difference from the signal electrodes 18. Consequently, the polar liquid 12' has been moved to the effective display region P1 side, as shown in FIG. 17B, and prevents the illumination light emitted from the backlight 16 from reaching the color filter 25r by shifting the oil 13 toward the reference electrode 19. Thus, the display color on the display surface becomes black display (i.e., the non-CF color display) due to the presence of the polar liquid 12'.

In the selected line, when the H voltage is applied to the signal electrodes 18, a potential difference occurs between the reference electrode 19 and the signal electrodes 18, but not between the signal electrodes 18 and the scanning electrode 20. Therefore, the polar liquid 12' is moved in the display space K toward the reference electrode 19 that makes a potential difference from the signal electrodes 18. Consequently, the polar liquid 12' has been moved to the non-effective display region P2 side, as shown in FIG. 17A, and allows the illumination light emitted from the backlight 16 to reach the color filter 25r. Thus, the display color on the display surface becomes red display (i.e., the CF color display) due to the color filter 25r. In the image display apparatus 1, when the CF color display is performed in all the three adjacent R, G, and B pixels as a result of the movement of the polar liquid 12' toward the non-effective display region P2, the red, green, and blue colors of light from the corresponding R, G, and B pixels are mixed into white light, resulting in the white display.

### < Non-selected line operation >

In the non-selected lines, e.g., when the L voltage is applied to the signal electrodes 18, the polar liquid 12' stands still in the same position, and the current display color is maintained. Since the M voltages are applied to both the reference electrodes 19 and the scanning electrodes 20, the potential difference between the reference electrodes 19 and the signal electrodes 18 is the same as that between the scanning electrodes 20 and the signal electrodes 18. Consequently, the display color is maintained without changing from the black display or the CF color display in the current state.

Similarly, in the non-selected lines, even when the H voltage is applied to the signal electrodes 18, the polar liquid 12' stands still in the same position, and the current display color is maintained. Since the M voltages are applied to both the reference electrodes 19 and the scanning electrodes 20, the potential difference between the reference electrodes 19 and the signal electrodes 18 is the same as that between the scanning electrodes 20 and the signal electrodes 18.

In the non-selected lines, as shown in Table 4, similarly to Table 3, the polar liquid 12' is not moved, but stands still and the display color on the display surface is unchanged regardless of whether the H or L voltage is applied to the signal electrodes 18.

On the other hand, in the selected line, the polar liquid 12' can be moved in accordance with the voltage applied to the signal electrodes 18, as described above, and the display color on the display surface can be changed accordingly.

In the image display apparatus 1 of this embodiment, other than the combinations of the applied voltages shown in Tables 3 and 4, the voltage applied to the signal electrodes 18 not only has two values of the H voltage and the L voltage, but also may be changed between the H voltage and the L voltage in accordance with information to be displayed on the display surface. That is, the image display apparatus 1 can perform the gradation display by controlling the signal voltage Vd. Thus, the display element 2' can achieve excellent display performance.

With the above configuration, this embodiment can have effects comparable to those of Embodiment 3. In this embodiment, unlike the conventional example, when the halftone display is performed, it is possible to prevent the color shade from being changed depending on the angle, no matter which azimuth direction the observer views the display from. Thus, this embodiment can avoid a reduction in display quality. Moreover, since this embodiment uses the color filter layer 25, the pixel regions P are provided in accordance with a plurality of colors that enable full-color display to be shown on the display surface side. Consequently, in this embodiment, the color image display can be performed by moving the corresponding polar liquid 12 properly in each of the pixels.

It should be noted that the above embodiments are all illustrative and not restrictive. The technological scope of the present invention is defined by the appended claims, and all changes that come within the range of equivalency of the claims are intended to be embraced therein.

For example, in the above description, the present invention is applied to an image display apparatus including a display portion. However, the present invention is not limited thereto, as long as it is applied to an electrical device with a display portion that displays the information including characters and images. For example, the present invention is suitable for various electrical devices with display portions such as a personal digital assistant such as an electronic organizer, a display apparatus for a personal computer or television, and an electronic paper.

In the above description, the electrowetting-type display element is used, in which the polar liquid is moved in accordance with the application of an electric field to the polar liquid. However, the display element of the present invention is not limited thereto, as long as it is an electric-field-induced display element that can change the display color on the display surface by moving the polar liquid in the display space with the use of an external electric field. For example, the present invention can be applied to other types of electric-field-induced display elements such as an electroosmotic type, an electrophoretic type, and a dielectrophoretic type.

As described in each of the above embodiments, the electrowetting-type display element is preferred because the polar liquid can be moved at a high speed and a low drive voltage. Moreover, in the electrowetting-type display element, the display color is changed with the movement of the polar liquid. Therefore, unlike a liquid crystal display apparatus or the like using a birefringent material such as a liquid crystal layer, it is possible to easily provide a high brightness display element with excellent utilization efficiency of light from the backlight or ambient light used for information display.

In the above description, the effective display region and the non-effective display region are set to be substantially parallel to the perpendicular direction. However, the present invention is not limited thereto, as long as the effective display region and the non-effective display region are defined so that the polar liquid is moved along the up-and-down direction in the display space.

As described in each of the above embodiments, it is preferable that the effective display region and the non-effective display region are set to be substantially parallel to the perpendicular direction, since the display element with excellent display quality can be easily provided.

In the above description, the polar liquid is a potassium chloride aqueous solution. However, the polar liquid of the present invention is not limited thereto. Specifically, the polar liquid can be, e.g., a material including an electrolyte such as a zinc chloride, potassium hydroxide, sodium hydroxide, alkali metal hydroxide, zinc oxide, sodium chloride, lithium salt, phosphoric acid, alkali metal carbonate, or ceramics with oxygen ion conductivity. The solvent can be, e.g., an organic solvent such as alcohol, acetone, formamide, or ethylene glycol other than water. The polar liquid of the present invention also can be an ionic liquid (room temperature molten salt) including pyridine-, alicyclic amine-, or aliphatic amine-based cations and fluorine anions such as fluoride ions or triflate.

The polar liquid of the present invention includes a conductive liquid having conductivity and a high dielectric liquid with a relative dielectric constant of a predetermined value or more, and preferably 15 or more.

As described in each of the above embodiments, the aqueous solution in which a predetermined electrolyte is dissolved is preferred for the polar liquid because the display element can have excellent handling properties and also be easily produced.

In the above description, the nonpolar oil is used. However, the present invention is not limited thereto, as long as an insulating fluid that is not mixed with the polar liquid is used. For example, air may be used instead of the oil. Moreover, silicone oil or an aliphatic hydrocarbon also can be used as the oil. The insulating fluid of the present invention includes a fluid with a relative dielectric constant of a predetermined value or less, and preferably 5 or less.

As described in each of the above embodiments, the nonpolar oil that is not compatible with the polar liquid is preferred because the droplets of the polar liquid move more easily in the nonpolar oil compared to the use of air and the polar liquid. Consequently, the polar liquid can be moved at a high speed, and the display color can be switched at a high speed.

In the above description of Embodiments 1 and 2, the thin film transistor is used as a switching element. However, the switching element of the present invention is not limited thereto, and other switching elements such as an MIM element may be used.

In the above description of Embodiment 1 and 2, the dielectric layer provided on the lower substrate (one of the first substrate and the second substrate) so as to cover the pixel electrodes is used as a capacitor. However, the capacitor of the present invention is not limited thereto, as long as it can store the charge supplied to each of the pixel electrodes (second electrodes). Specifically, a capacitor (discrete component) may be provided, or when the pixel electrodes are buried in one of the first substrate and the second substrate, the substrate incorporating the pixel electrodes may be used as a capacitor. Alternatively, the lower substrate on which the pixel electrodes are formed and coated with the hydrophobic film may be used as a substrate having a capacitor for each pixel.

As described in each of the above embodiments, the use of the dielectric layer is preferred because the placement of the capacitor that is a discrete component can be eliminated, and thus the display element having a simple structure can be easily provided.

In the above description, the black colored polar liquid or the oil is used. However, the polar liquid or the oil of the present invention is not limited thereto.

For example, the polar liquids or oils that are colored different colors such as RGB, CMY composed of cyan (C), magenta (M), and yellow (Y), or RGBYC also can be used, so that the pixel regions are provided in accordance with a plurality of colors that enable full-color display to be shown on the display surface side. When the colored polar liquids or oils are used, the formation of the color filter layer can be eliminated in Embodiment 4.

The above description of Embodiments 1, 3, and 4 refers to the transmission type display element including a backlight. However, the present invention is not limited thereto, and may be applied to a reflection type display element including a light reflection portion such as a diffuse reflection plate, a semi-transmission type display element including the light reflection portion along with a backlight, or the like.

In the above description of Embodiment 3 and 4, the signal electrodes are provided on the upper substrate (first substrate) and the reference electrodes and the scanning electrodes are provided on the lower substrate (second substrate). However, the present invention is not limited thereto, and may have a configuration in which the signal electrodes are placed in the display space so as to come into contact with the polar liquid, and the reference electrodes and the scanning electrodes are provided on one of the first substrate and the second substrate so as to be electrically insulated from the polar liquid and each other. Specifically, e.g., the signal electrodes may be provided on the second substrate or on the ribs, and the reference electrodes and the scanning electrodes may be provided on the first substrate.

In the above description of Embodiments 3 and 4, the reference electrodes and the scanning electrodes are located on the effective display region side and the non-effective display region side, respectively. However, the present invention is not limited thereto, and the reference electrodes and the scanning electrodes may be located on the non-effective display region side and the effective display region side, respectively.

In the above description of Embodiments 3 and 4, the reference electrodes and the scanning electrodes are provided on the surface of the lower substrate (second substrate) that faces the display surface side. However, the present invention is not limited thereto, and can use the reference electrodes and the scanning electrodes that are buried in the second substrate made of an insulating material. In this case, the second substrate also can serve as a dielectric layer, which can eliminate the formation of the dielectric layer.

In the above description of Embodiments 3 and 4, the reference electrodes and the scanning electrodes are made of transparent electrode materials. However, the present invention is not limited thereto, as long as either one of the reference electrodes and the scanning electrodes, which are arranged to face the effective display regions of the pixels, are made of the transparent electrode materials. The other electrodes that do not face the effective display regions can be made of opaque electrode materials such as aluminum, silver, chromium, and other metals.

In the above description of Embodiment 3 and 4, the reference electrodes and the scanning electrodes are in the form of stripes. However, the shapes of the reference electrodes and the scanning electrodes of the present invention are not limited thereto. For example, the reflection type display element may use linear or mesh electrodes that are not likely to cause a light loss, since the utilization efficiency of light used for information display is lower in the reflection type display element than in the transmission type display element.

In the above description of Embodiments 3 and 4, the signal electrodes are linear wiring. However, the signal electrodes of the present invention are not limited thereto, and can be wiring with other shapes such as mesh wiring.

In the description of Embodiment 4, the color filter layer is formed on the surface of the upper substrate (first substrate) that faces the non-display surface side. However, the present invention is not limited thereto, and the color filter layer may be formed on the surface of the first substrate that faces the display surface side or on the lower substrate (second substrate). Thus, the color filter layer is preferred compared to the use of the polar liquids with different colors because the display element can be easily produced. Moreover, the color filter layer is also preferred because the effective display region and the non-effective display region can be properly and reliably defined with respect to the display space by the color filter (aperture) and the black matrix (light-shielding film) included in the color filter layer, respectively.

### Industrial Applicability

The present invention is useful for a display element that can perform desired halftone display no matter which azimuth direction an observer views the display from, and thus can suppress a reduction in display quality, and an electrical device using the display element.

### Description of Reference Numerals

- 1: Image display apparatus (electrical device)
- 2, 2': Display element
- 6: Upper substrate (first substrate)
- 7: Lower substrate (second substrate)
- 8: Pixel electrode (second electrode)
- 9: Common electrode (first electrode)
- 10: Light-shielding layer
- 10a: Aperture
- 10s: Black matrix (light-shielding film)
- 11: Rib (partition)
- 11a: First rib member
- 11b: Second rib member
- 12, 12': Polar liquid
- 13, 13': Oil (insulating fluid)
- 14: Dielectric layer (capacitor)
- 17: Reflecting electrode (second electrode, pixel electrode)
- 18: Signal electrode (first electrode)
- 19: Reference electrode (second electrode)
- 20: Scanning electrode (second electrode)
- 21: Signal driver (signal voltage application portion)
- 22: Reference driver (reference voltage application portion)
- 23: Scanning driver (scanning voltage application portion)
- 25: Color filter layer
- 25r, 25g, 25b: Color filter (aperture)
- 25s: Black matrix (light-shielding film)
- S: Source line (data line)
- G: Gate line
- SW: Thin film transistor (switching element)
- K: Display space
- P: Pixel region
- P1: Effective display region
- P2: Non-effective display region

## Claims

1. A display element that comprises a first substrate provided on a display surface side, a second substrate provided on a non-display surface side of the first substrate so that a predetermined display space is formed between the first substrate and the second substrate, an effective display region and a non-effective display region that are defined with respect to the display space, and a polar liquid sealed in the display space so as to be moved toward at least the effective display region, and that is capable of changing a display color on the display surface side by moving the polar liquid,
wherein the display element comprises:
a first electrode that is placed in the display space so as to come into contact with the polar liquid; and
a second electrode that is provided on one of the first substrate and the second substrate so as to be electrically insulated from the polar liquid and the first electrode, and
wherein the effective display region and the non-effective display region are defined so that the polar liquid is moved along an up-and-down direction in the display space.

2. The display element according to claim 1, wherein the non-effective display region is defined by a light-shielding film that is provided on the other of the first substrate and the second substrate, and
the effective display region is defined by an aperture formed in the light-shielding film.

3. The display element according to claim 1 or 2, wherein the effective display region and the non-effective display region are set to be substantially parallel to a perpendicular direction.

4. The display element according to any one of claims 1 to 3, wherein data lines and gate lines are provided on one of the first substrate and the second substrate in the form of a matrix,
a planar transparent electrode that serves as the first electrode is provided on the other of the first substrate and the second substrate, and
a plurality of pixel regions are located at each of intersections of the data lines and gate lines, and
wherein in each of the plurality of the pixel regions, a switching element is connected to the data line and the gate line, a pixel electrode that serves as the second electrode is connected to the switching element, and a capacitor that stores a charge supplied to the pixel electrode is provided.

5. The display element according to claim 4, wherein a reflecting electrode is used as the pixel electrode.

6. The display element according to claim 4 or 5, wherein the capacitor is a dielectric layer that is provided on one of the first substrate and the second substrate so as to cover the pixel electrode.

7. The display element according to any one of claims 4 to 6, wherein the plurality of the pixel regions are provided in accordance with a plurality of colors that enable full-color display to be shown on the display surface side.

8. The display element according to any one of claims 1 to 3, wherein a signal electrode that serves as the first electrode is placed in the display space,
a reference electrode that serves as the second electrode is provided on one of the first substrate and the second substrate so as to be located on one of the effective display region side and the non-effective display region side, and
a scanning electrode that serves as the second electrode is provided on one of the first substrate and the second substrate so as to be electrically insulated from the reference electrode and to be located on the other of the effective display region side and the non-effective display region side.

9. The display element according to claim 8, wherein a plurality of the signal electrodes are provided along a predetermined arrangement direction, and
a plurality of the reference electrodes and a plurality of the scanning electrodes are alternately arranged so as to intersect with the plurality of the signal electrodes, and
wherein the display element comprises:
a signal voltage application portion that is connected to the plurality of the signal electrodes and applies a signal voltage in a predetermined voltage range to each of the signal electrodes in accordance with information to be displayed on the display surface side;
a reference voltage application portion that is connected to the plurality of the reference electrodes and applies one of a selected voltage and a non-selected voltage to each of the reference electrodes, the selected voltage allowing the polar liquid to move in the display space in accordance with the signal voltage and the non-selected voltage inhibiting a movement of the polar liquid in the display space; and
a scanning voltage application portion that is connected to the plurality of the scanning electrodes and applies one of a selected voltage and a non-selected voltage to each of the scanning electrodes, the selected voltage allowing the polar liquid to move in the display space in accordance with the signal voltage and the non-selected voltage inhibiting a movement of the polar liquid in the display space.

10. The display element according to claim 9, wherein the plurality of the pixel regions are located at each of the intersections of the plurality of the signal electrodes and the plurality of the scanning electrodes.

11. The display element according to any one of claims 8 to 10, wherein a dielectric layer is formed on the surfaces of the plurality of the reference electrodes and the plurality of the scanning electrodes.

12. The display element according to any one of claims 8 to 11, wherein the plurality of the pixel regions are provided in accordance with a plurality of colors that enable full-color display to be shown on the display surface side.

13. The display element according to any one of claims 1 to 12, wherein an insulating fluid that is not mixed with the polar liquid is movably sealed in the display space.

14. An electrical device comprising a display portion that displays information including characters and images,
wherein the display portion comprises the display element according to any one of claims 1 to 13.
